Europäisches Patentamt

European Patent Office

Office européen des brevets

(19)

(11) Numéro de publication: **0 044 252**
**A1**

(12) **DEMANDE DE BREVET EUROPEEN**

(21) Numéro de dépôt: 81401109.4

(22) Date de dépôt: 09.07.81

(51) Int. Cl.³: **B 60 K 9/00**
B 60 T 1/10, F 02 B 71/04

(30) Priorité: 10.07.80 FR 8015416

(43) Date de publication de la demande:
20.01.82 Bulletin 82/3

(84) Etats contractants désignés:
DE FR GB IT NL SE

(71) Demandeur: Jardinier, Jean Paul
22, rue Gustave Flaubert Clos du Castelet
F-33320 Eysines(FR)

(71) Demandeur: Luscan, Bernard Alphonse
67, Avenue des Eyquems
F-33700 Merignac(FR)

(71) Demandeur: Viry, Jacques
34, Avenue de la Libération
F-33310 Lormont(FR)

(72) Inventeur: Jardinier, Jean Paul
22, rue Gustave Flaubert Clos du Castelet
F-33320 Eysines(FR)

(72) Inventeur: Luscan, Bernard Alphonse
67, Avenue des Eyquems
F-33700 Merignac(FR)

(72) Inventeur: Viry, Jacques
34, Avenue de la Libération
F-33310 Lormont(FR)

(74) Mandataire: Joly, Jean Jacques et al,
CABINET BEAU DE LOMENIE 55, rue d'Amsterdam
F-75008 Paris(FR)

(54) Procédé et systeme de propulsion d'un véhicule à roues à transmission hydraulique.

(57) On transmet l'énergie hydraulique haute-pression fournie par au moins un générateur hydraulique constitué d'un moteur thermique alternatif dont les pistons entraînent cinématiquement, sans l'intermédiaire de vilebrequin, les pistons d'une pompe hydraulique, à des moteurs hydrauliques à cylindrée variable au travers d'un accumulateur hydraulique haute pression de stockage temporaire. Selon l'invention, on fait fonctionner le générateur hydraulique (1,8) exclusivement à deux points de fonctionnement à fréquence, quantité de carburant par cycle et richesse constantes, l'un de ces points correspondant à la puissance nominale définie par le point de consommation minimale du moteur, l'autre correspondant à un fonctionnement à puissance réduite ou nulle, en faisant fournir à la pompe hydraulique (8) associée au moteur (1) une puissance hydraulique constante ou nulle, de telle sorte que le mouvement du piston thermique soit indépendant de la pression de refoulement, et on assure la transformation sans à coup du fonctionnement digital du générateur en fonctionnement analogigue de la transmission de puissance aux roues en réponse à l'enfoncement de la pédale d'accélération.

./...

EP 0 044 252 A1

Fig-1

1

Procédé et système de propulsion d'un véhicule à roues à transmission hydraulique.

L'invention concerne un procédé et un système de propulsion pour véhicule à roues susceptible de circuler en phase d'accélération ou de croisière en réponse à un enfoncement de la pédale d'accélération, et en phase de freinage, en réponse à un enfoncement de la pédale de freinage, ce procédé étant du type selon lequel on transmet l'énergie hydraulique haute-pression fournie par au moins un générateur hydraulique constitué d'un moteur thermique alternatif dont les pistons entraînent cinématiquement, sans l'intermédiaire de vilebrequin, les pistons d'une pompe hydraulique, à des moteurs hydrauliques à cylindrée variable au travers d'un accumulateur hydraulique haute pression de stockage temporaire.

On a déjà proposé de tels procédés de propulsion pour pallier les inconvénients des véhicules du type qui présentent généralement, pour la transmission de l'énergie depuis le moteur thermique jusqu'aux roues, la chaîne suivante : piston, bielle, vilebrequin, embrayage, boîte de vitesses, arbre de transmission, différentiel, cardans.

Une telle transmission de l'énergie, malgré de nombreux efforts pour en améliorer le rendement, se montre encore très consommatrice en carburant. Les énergies de remplacement n'ont pas encore su se substituer aux carburants dérivés du pétrole, dans le domai- de la traction terrestre, car elles ne présentent pas les avantages de ces derniers, notamment une forte énergie potentielle stockée sous faible volume, une masse faible, et une transformabilité immédiate et permanente en puissance mécanique.

Parmi les nombreuses pertes de rendement d'un véhicule à carburant classique, l'une des plus importantes est sans doute le mauvais rendement du moteur thermique lui-même qui ne fonctionne que rarement à une fréquence et une charge optimale. S'y ajoutent de nombreuses autres causes comme le brassage de l'huile par les engrenages de la boîte de vitesse, l'inertie des pièces tournantes lors des changements de vitesse, la consommation au ralenti.

Une part importante des pertes mécaniques provient de l'embiellage et de l'effort latéral exercé par la bielle sur le cylindre et du manque de souplesse d'une telle transmission.

Aussi diverses solutions utilisant des moteurs à pistons libres et des transmission hydrauliques ont-elles été proposées, mais elles n'apportent pas de solutions satisfaisantes à l'obtention d'ensembles moteur-transmission véritablement économiques.

Dans ces solutions on met en général l'accent sur le bon rendement des moteurs à pistons libres du fait de la suppression des bielles et du vilebrequin, mais les Demandeurs ont observé que les moteurs sont utilisés à charge variable et ils ont aussi une course variable, ce qui a pour effet de faire varier le taux de compression, et donc aussi le rendement. En outre, du fait du régime variable, on se heurte à des problèmes de stabilité de mouvement du piston libre qui ne sont en général résolus qu'en dégradant l'énergie.

En ce qui concerne la transmission, on suggère l'utilisation de moteurs à cylindrée fixe dont on fait varier le couple en fractionnant le nombre de moteurs suivant la puissance et en réglant la pression par dissipation d'énergie hydraulique. Une telle association moteur-transmission conduit à un rendement global moteur transmission plus mauvais que celui d'un moteur à vilebrequin à transmission mécanique.

L'analyse des solutions proposées faite par les Demandeurs montre qu'elles débouchent sur des résultats médiocres (prévisibles) en consommation de carburant, et que le problème de véhicule comportant un moteur thermique associé à une transmission hydraulique est loin d'être évident.

Ils ont montré en particulier que, si on remplace sur un véhicule classique, la transmission mécanique par une transmission hydraulique comportant une pompe rotative et des moteurs hydrauliques à cylindrée variable montés sur les roues, on accroît la masse de la transmission à iso-masse du moteur et on n'améliore le rendement global que dans des conditions bien précises d'optimisation ; on peut même obtenir un rendement plus mauvais que celui d'une transmission mécanique. Ceci peut apparaître paradoxal quand on sait que les pompes et moteurs à cylindrées variables ont des rendements qui peuvent atteindre 95%. En tous cas cet exemple montre qu'une transmission hydraulique associée à un moteur à vilebrequin ne présente que peu d'intérêt.

Il n'en va pas de même si on utilise un moteur à pistons libres où la transmission hydraulique devient obligatoire.

Mais, là encore, les Demandeurs ont découvert que seul un ensemble de mesures cohérentes concernant et le moteur, et la transmission, conduisait à des résultats satisfaisants.

Ils ont montré, en effet, qu'on peut diviser la consommation au moins par deux si on adopte le procédé et le système de propulsion de l'invention.

Le but de l'invention, qui est de proposer un procédé de propulsion économique en carburant, est notamment atteint par le fait qu'on fait fonctionner le générateur hydraulique exclusivement à deux points de fonctionnement à fréquence, quantité de carburant par cycle et richesse constantes, l'un de ces points correspondant à la puissance nominale définie par le point de consommation minimale du moteur qui aura été obtenu dans le cadre des paramétrages de la mise au point du moteur, l'autre correspondant à un fonctionnement à puissance réduite ou nulle, en faisant fournir à la pompe hydraulique associée au moteur une puissance hydraulique constante ou nulle, de telle sorte que le mouvement du piston thermique soit indépendant de la pression de refoulement, et qu'on assure la transformation sans à-coup du fonctionnement digital du générateur en fonctionnement analogique de la transmission de puissance aux roues en réponse à l'enfoncement de la pédale d'accélération.

Le moteur à piston libre est constitué de pistons effectuant un mouvement de va et vient rectiligne dans un (des) cylindre(s) sous l'action de la pression des gaz résultant de la combustion d'un mélange d'air et de carburant, l'énergie ainsi produite avec un cycle deux temps est communiquée à une pompe hydraulique rectiligne qui débite dans un accumulateur et également dans des moteurs hydrauliques à cylindrée variable et à pistons axiaux associés aux roues. Un réservoir basse pression recueille le fluide ayant exécuté le cycle complet.

Une caractéristique essentielle de l'invention est donc de pouvoir faire fonctionner l'ensemble moteur-pompe à puissance et régime constants ; ces deux conditions réunies permettent d'avoir un couple résistant constant (refoulement de l'huile) et indépendant de la pression régnant dans les accumulateurs. Comme le moteur thermique est actionné à sa puissance nominale, il en résulte un fonctionnement pulsé si la puissance absorbée par les moteurs hydrauliques est inférieure à la puissance du moteur thermique.

Autrement dit, si le débit des moteurs hydrauliques est plus faible que celui sortant de la pompe, l'excédent de débit sert à remplir l'accumulateur jusqu'à une valeur maximale de pression. Au moment où cette
pression est atteinte, il faut arrêter le fonctionnement du moteur
thermique en arrêtant le débit d'injection de carburant, ou le faire fonctionner en court-circuit avec un
débit de carburant réduit. Pendant cette période,
les moteurs hydrauliques sont alimentés par le débit de
décharge de l'accumulateur jusqu'à une valeur de
pression déterminée.

Le fait d'avoir un point unique de fonctionnement en charge garantit la course constante des pistons
moteurs et donc également du taux de compression qui
est ainsi indépendant des conditions de marche du véhicule.
Le fonctionnement à régime et puissance constants permet
de résoudre plus simplement le problème de stabilité
inhérent au mouvement des pistons libres.

Le couple transmis aux roues par l'intermédiaire de moteurs hydrauliques à cylindre variable est
proportionnel à la pression P et à la cylindrée $\alpha$. Comme
selon l'invention, la pression varie au rythme des remplissages et vidanges de l'accumulateur, l'invention
prévoit aussi de faire varier la cylindrée en sens inverse de la pression pour que le produit $P\alpha$ soit constant
et la transmission du couple aux roues du véhicule s'effectue sans à coups. On constate donc là encore l'importance de ne pas dissocier le moteur et les organes hydrauliques car,
compte tenu du fonctionnement en tout ou rien du moteur
thermique et de la pompe et du fonctionnement analogique des moteurs hydrauliques, on doit considérer
l'ensemble comme formé des deux sous-ensembles suivants :
                    - le générateur hydraulique constitué par le
moteur thermique, la pompe, les accumulateurs, fonctionnant en tout ou rien, chargé de fournir une pression aux
moteurs hydrauliques qui varie entre deux valeurs déterminées ;

- la transmission constituée par les moteurs hydrauliques et les roues du véhicule, fonctionnant en continu (analogique), qui transmet le couple résultant de la pression et de la cylindrée pour procurer une vitesse au véhicule.

Pour optimiser le rendement global, il est avantageux d'utiliser plusieurs moteurs hydrauliques à cylindrée variable. On peut ainsi, par une simple commutation, alimenter ou non certains moteurs hydrauliques. Ainsi, pour un véhicule à quatre roues dont chacune est associée à un moteur hydraulique, on peut n'avoir que deux roues motrices à faible charge ou quatre roues motrices dans le cas contraire.

Selon une autre disposition, on peut, au lieu d'associer à chaque roue un moteur, avoir un seul ensemble de moteurs relié par un réducteur et un différentiel aux roues du véhicule. Cette solution offre l'avantage de permettre beaucoup de combinaisons de couples mais, en revanche présente, par rapport à la précédente, l'inconvénient d'utiliser un différentiel.

Les moteurs hydrauliques utilisés sont avantageusement des moteurs réversibles à pistons axiaux à plateau d'inclinaison positive ou négative variable pour la variation de cylindrée. Par simple variation de l'inclinaison du plateau, on peut faire varier instantanément le couple moteur. En donnant une inclinaison négative au plateau, les moteurs hydrauliques travaillent en pompe, ce qui permet, d'une part de freiner le véhicule et, d'autre part, de récupérer l'énergie de freinage en la stockant dans l'accumulateur haute-pression du circuit hydraulique.

De façon particulièrement avantageuse, il n'est plus nécessaire de lubrifier les pistons des moteurs thermiques du fait que dans un piston libre on peut éviter le contact entre piston et cylindre. En conséquence, il devient possible, pour limiter les pertes thermiques d'une part, de ne pas utiliser de refroidissement forcé, d'autre part, d'isoler thermiquement le moteur vis à vis du milieu extérieur.

Moyennant certains aménagements de la loi d'évolution du volume de la chambre en fonction du temps, dont il sera donné deux exemples de réalisation, il est alors possible de retirer un maximum d'avantages de la limitation des pertes thermiques entre le moteur et le milieu extérieur. Il est connu en effet que le moteur adiabatique est peu avantageux sur le plan de la consommation spécifique si la cinématique des pistons résulte directement d'un système bielle-manivelle classique.

L'absence de refroidissement et l'isolement thermique du moteur sont rendus possibles par le fait que les parties chaudes du moteur sont réalisées en matériaux capables de bonne résistance mécanique, même à hautes températures. De tels matériaux doivent non seulement résister à la température, mais à l'oxydation à chaud.

Il a été découvert qu'il était particulièrement intéressant d'utiliser des matériaux composites à renfort multidirectionnel et à matrice céramique, du type de ceux décrits, par exemple, dans le brevet français n° 2.276.916. Les matériaux préférés à cet égard sont ceux du type silice-silice, excellents isolants, et carbure de silicium-carbure de silicium, conducteurs thermiques à très bonne tenue mécanique. L'utilisation de matériaux composites conducteurs est particulièrement indiquée pour la construction des pistons thermiques et de leur chemise, dans les moteurs thermiques des véhicules conformes à l'invention, tandis que le carter du moteur est avantageusement réalisé en matériau composite isolant.

8

Avantageusement, on règle, pendant la phase de croisière, la pression hydraulique d'alimentation des moteurs hydrauliques, qui sont à cylindrée variable, de façon à obtenir la cylindrée maximale.

Avantageusement, on utilise deux accumulateurs commutables de capacités différentes, l'un de grande capacité étant utilisé pendant la phase d'accélération, et l'autre pendant la phase de croisière.

Selon un autre aspect avantageux de l'invention, il est possible d'utiliser temporairement l' a c c u m u l a t e u r  d'accélération pour disposer d'une surpuissance transitoire plus élevée que la puissance nominale du générateur hydraulique.

De façon connue en soi on récupère l'énergie de freinage dans l'accumulateur d'accélération en faisant fonctionner les moteurs hydrauliques en pompe. Selon l'invention, on récupère le maximum de l'énergie de freinage, dans une plage de vitesses données, en assignant la loi de pression dans l'accumulateur d'accélération à être une fonction unique de la vitesse du véhicule.

Selon une autre caractéristique de l'invention, il est possible d'obtenir au cours de l'accélération une surpuissance transitoire plus élevée que la puissance nominale du générateur hydraulique en assignant la loi de pression dans l'accumulateur à être une fonction de la vitesse du véhicule et de l'enfoncement de la pédale d'accélération.

Quoiqu'il puisse paraître à première vue que l'invention vise une pluralité d'aspects, il est essentiel de voir qu'elle propose un véhicule cohérent, c'est-à-dire dont le rendement énergétique est optimisé dans toutes les conditions de marche, et pas seulement dans certaines situations privilégiées.

En effet, on peut assimiler les conditions de marche imposées par son conducteur à un véhicule automobile à une succession de paliers à vitesse constante séparés par des phases d'accélération ou de décélération.

Dans le cas des paliers, et pour un véhicule automobile classique, le conducteur a sélectionné un rapport de vitesse et il réalise la vitesse constante en réglant le débit de carburant pour que, compte tenu du régime imposé par la transmission mécanique, le moteur fonctionne à une charge telle qu'il fournisse la puissance nécessaire pour vaincre les forces de résistance à l'avancement du véhicule.

Il est bien connu que le rendement du moteur varie en fonction de la charge et que le rendement de la transmission dépend du rapport de boîte de vitesse sélectionné. De plus, le nombre de rapports de boîte étant limité et même si le conducteur sélectionnait toujours le rapport optimum, on ne pourrait pallier le fait que certaines vitesses de croisière seraient plus économiques que d'autres car le moteur a une consommation spécifique minimum pour un régime qui dépend notamment de la charge.

On conçoit que, même en vitesse de croisière, une automobile classique fonctionne en quasi permanence en dehors de ses conditions optimales de rendement.

La présente invention permet notamment de réaliser, quelles que soient les conditions de croisière, le rendement global optimum car :

- le générateur hydraulique délivre exclusivement sa puissance avec sa consommation spécifique minimum ;

- la pression dans l'accumulateur de croisière est déterminée de telle sorte que les moteurs hydrauliques en fonction aient le rendement optimum (c'est-à-dire la cylindrée maximum). En pratique, le réglage de la puissance motrice, en fonction de la vitesse de croisière affichée par le conducteur, se fait donc par adaptation de la pression dans l'accumulateur de croisière.

On pourra remarquer qu'à une vitesse de croisière donnée peuvent correspondre différentes valeurs de pression moyenne dans l'accumulateur en fonction de la pente de la route, de la charge du véhicule, de la force et de l'orientation du vent, etc. Dans tous les cas, un organe de calcul règle la pression de l'accumulateur de telle sorte que le rendement global soit optimum.

Dans le cas des décélérations et pour une automobile classique, elles sont produites par la combinaison des trois effets suivants :

- résistance de l'air
- frein moteur
- freinage par frottement au niveau des roues.

La présente invention consiste, dans le cadre de la conduite économique, à remplacer le frein moteur et le frein sur les roues par l'inversion de l'inclinaison des plateaux de moteurs hydrauliques réversibles qui travaillent alors en pompe afin de remplir un accumulateur dit "d'accélération" de grande capacité vis à vis de la capacité de l'accumulateur de croisière. Il est clair néanmoins que l'accumulateur d'accélération ne peut avoir une capacité suffisante pour récupérer la totalité de l'énergie potentielle d'un véhicule qui descend un col, par exemple. Dans ce cas, la puissance hydraulique doit être dissipée en chaleur à travers un orifice de décharge et les calories sont évacuées au moyen d'un radiateur disposé sur le circuit hydraulique basse pression.

Afin de ne pas trop alourdir le véhicule, on peut se donner comme règle de dimensionnement de l'accumulateur qu'il soit capable de stocker l'énergie cinétique du véhicule à 50 ou 60 km/h environ. En effet, en conduite urbaine, caractérisée par des arrêts fréquents, on récupère ainsi presque toute l'énergie de freinage. En conduite sur route à 90 km/h où il y aura des ralentissements à 60 km/h pour la traversée des agglomérations, l'accumulateur dimensionné pour la ville sera capable de stocker (aux pertes près) la plus grande partie des variations d'énergie cinétique entre 90 et 60 km/heure.

Enfin, en conduite sur autoroute, la résistance de l'air devient prépondérante et dans la plupart des cas de décélération les plateaux des moteurs n'atteindront pas l'inclinaison négative.

Dans le cas des accélérations et pour un véhicule classique, l'accélération est obtenue par

- accroissement de la charge du moteur à faible régime qui s'accompagne systématiquement d'une hausse de la consommation spécifique ;

- changements de vitesses successifs qui s'accompagnent d'accroissement successif de régime des organes tournants suivi d'un freinage brutal et dissipatif quand le conducteur enclenche la vitesse supérieure.

Selon la présente invention, et en conduite économique (faible enfoncement de la pédale d'accélérateur) la loi de pression dans l'accumulateur d'accélération est une fonction unique de la vitesse du véhicule aussi bien dans le sens croissant que dans le sens décroissant de la vitesse du véhicule, ce qui est représenté par la courbe a de la figure 9a courbe donnant la pression P de l'accumulateur d'accélération en fonction de la vitesse $v$ du véhicule. Cette pression P varie entre la pression de gonflage $P_g$ et la pression maximum $P_M$.

La fonction a est définie comme étant l'accroissement de pression dans l'accumulateur lorsque le véhicule est freiné par inversion d'inclinaison des plateaux des moteurs hydrauliques. On remarquera que si, à partir de la vitesse zéro, on voulait accélérer le véhicule au moyen exclusivement de l'accumulateur d'accélération, on n'atteindrait (courbe (b)) qu'une vitesse $v_m$ inférieure à la vitesse initiale de 60 km/h (choisie à titre d'exemple pour les raisons suivantes :

- en décélération, une partie de l'énergie cinétique Ec est absorbée par l'ensemble des pertes mécaniques et hydrauliques Ea. On a donc stocké Ec - Ea, alors qu'en accélération pour atteindre une même vitesse, il faudra dépenser Ec + Ea. Il en résulte qu'on ne retrouve pas les mêmes points en freinage qu'en accélération comme l'indique la figure.

- il existe d'autres pertes comme par exemple la non réversibilité d e  l a  compression - détente du gaz de l'accumulateur (pertes thermiques notamment).

On constate donc que pour accélérer conformément à la courbe (a), il convient d'éviter de simplement vider l'accumulateur selon la courbe (b) en compensant l'écart entre les deux courbes, pour chaque vitesse intermédiaire, au moyen du générateur hydraulique qui, comme toujours dans le cadre de cette invention, fonctionnera de façon discontinue. Les accélérations se produiront donc en suivant la courbe (d) (fig.9b) qui se superpose à la courbe (a) de façon approchée.

Comme précisé ci-dessus, la courbe (a) est à considérer comme la courbe de gonflage-dégonflage de l'accumulateur qui permet le fonctionnement économique ; en effet, si on accélère suivant cette loi de pression, on peut obtenir l'accélération maximum compatible à chaque instant avec la récupération maximum de l'énergie cinétique communiquée au véhicule. Si le conducteur stabilise son véhicule à une vitesse $V_0$ inférieure à 60 km/h, l'accumulateur d'accélération restera gonflé à $p_0$ (conformément à la fonction (a) fig.9c) de telle sorte qu'en cas de freinage, on pourra récupérer l'énergie cinétique en totalité. Pour obtenir la puissance nécessaire à la croisière, il faut alors commuter (phase e) les accumulateurs et alimenter les moteurs hydrauliques sur l'accumulateur de croisière à pression $p'_0$ définie par la courbe f donnant la pression de l'accumulateur de croisière en fonction de la vitesse.

L'accumulateur d'accélération reste disponible soit pour le freinage, soit pour une accélération économique mais néanmoins rapide jusqu'à 60 km/h.

Le cas de l'accélération économique présenté ci-dessus peut apparaître très restrictif et il convient de montrer que des accélérations plus fortes sont non seulement possibles, mais encore que dans la plupart des cas, elles ne pénalisent pas le rendement d'ensemble de la propulsion.

Supposons en effet que le conducteur enfonce fortement la pédale d'accélérateur,ce qui revient à fournir un débit hydraulique complémentaire important au moyen du générateur hydraulique et à vider l'accumulateur suivant la courbe (g)de la fig. 9d.

Si le conducteur désire dépasser la vitesse de 60 km/h, l'accumulateur d'accélération va lui permettre de disposer pratiquement jusqu'à $v_2$ d'un surcroît de puissance vis à vis de la puissance dont est capable le générateur hydraulique. Ce surcroît de puissance existe entre les valeurs $v'_1$ et $v'_2$ constituant les intersections entre la courbe (g) et la courbe (h) de puissance correspondant à la puissance nominale constante de l'ensemble moteur-pompe.

Le véhicule atteint donc la vitesse $v_2$ plus vite que s'il avait dégonflé l'accumulateur suivant la courbe ($\underline{a}$)

- si le conducteur désire effectuer une croisière à vitesse $v_1$ inférieure à 60 km/h, lorsque la vitesse $v_1$ est atteinte, il existe une surpression $p_1 - p'_1$ dans l'accumulateur d'accélération qui permettra d'effectuer le début de la croisière sur l'accumulateur d'accélération, la commutation avec l'accumulateur de croisière ne se faisant que quand $p'_1$ sera atteint.

Comme le générateur fonctionne toujours à son rendement optimum, il est indifférent qu'il ait fourni davantage d'énergie avant que $v_1$ ne soit atteint puisqu'il ne sera pas sollicité pour une énergie égale en début de croisière.

On constate donc, et ce n'est pas là le moindre intérêt de l'invention, que la conduite "pied au plancher" est dans la plupart des cas sans influence néfaste sur la consommation.

Il existe néanmoins une exception dans le cas où la durée de la croisière à vitesse $v_1$ est insuffisnate pour faire chuter la pression de l'accumulateur d'accélération de $p_1$ à $p'_1$. Si on suppose en effet qu'à l'instant où son véhicule atteint $v_1$ avec une pression $p_1$ dans l'accumulateur le conducteur commande son immobilisation, l'accumulateur d'accélération sera incapable de stocker la totalité de l'énergie développée par le freinage.

On peut, par ailleurs, faire les trois remarques générales suivantes sur les accélérations et freinages.

Il est possible de tenir compte de l'influence de la masse du véhicule. En toute rigueur, la courbe (a) n'est pas unique dans la mesure où l'énergie cinétique dépend du poids total en charge du véhicule.

Ceci correspond à une courbe (k) plus descendante en charge qu'à vide (fig.$9\underline{e}$ ). Si on oblige le véhicule chargé d'une masse $m_1$ supérieure à la masse à vide $m_o$, à suivre en accélération ou en freinage la courbe ($\underline{a}$) correspondant à la masse à vide $m_o$, ceci revient à sur-compenser les pertes mécaniques et hydrauliques en remplissant davantage l'accumulateur au cours de l'accélération, ce qui a pour effet de diminuer légèrement la récupération de l'énergie cinétique de freinage.

En ce qui concerne les moteurs hydrauliques, on recherche pour les accélérations et les freinages, comme pour la croisière, à obtenir le meilleur rendement de la transmission hydraulique. En conséquence, et compte tenu des combinaisons possibles des moteurs hydrauliques (moteurs roues arrière seuls, moteurs roues avant seuls, moteurs roues avant et arrière en même temps, par exemple), l'organe de calcul sélectionne les moteurs à mettre en circuit en fonction de l'enfoncement des pédales d'accélération ou de freinage et de la pression dans l'accumulateur d'accélération, de telle sorte que l'inclinaison des plateaux soit la plus forte possible.

Par ailleurs, la courbe (a) présentée précé-demment, est caractéristique du fonctionnement urbain ; elle est donc définie pour que la pression dans l'accumulateur soit maximum quand le véhicule s'immobilise.

On conçoit aisément que pour la conduite sur route on a intérêt à définir une fonction (fig. $9\underline{f}$) telle qu'à 90 km/h l'accumulateur soit dégonflé. Dans ces conditions, pour des freinages dans la plage 90 km/h à $v_c$ , on pourra récupérer la totalité de l'énergie de freinage.

En conduite sur route ou autoroute, le conducteur ralenti par un véhicule qu'il se propose de doubler dès que possible, peut donner l'ordre au générateur hydraulique (qui ne fonctionne pas en permanence si ce véhicule n'est pas en croisière à sa vitesse maximum) de gonfler l'accumulateur d'accélération. Au moment de la manoeuvre de dépassement : l'énergie stockée dans l'accumulateur d'accélération peut fournir une surpuissance temporaire vis à vis de la puissance maximum du générateur hydraulique.

En ce qui concerne l'influence de la pente (ou du vent), elle est comparable à celle de la masse du véhicule.

Si le véhicule monte, son freinage ne permettrait pas de gonfler l'accumulateur d'accélération suivant la loi ($a$) et le générateur hydraulique fonctionne pour compenser, pour chaque valeur de la vitesse, l'écart de pression entre la courbe ($a$) et celle que donnerait la récupération de l'énergie cinétique. Si par contre le véhicule descend, il y a dissipation d'énergie hydraulique à travers un clapet de surpression dès que la pression maximum de l'accumulateur a été atteinte.

Pour ce qui est du rendement de la transmission aux vitesses transitoires, il a été dit que les moteurs hydrauliques ne fonctionnent pas alors dans leurs conditions optimales. Il convient de mentionner néanmoins que pendant les freinages, même si le rendement est modeste, le gain est total vis à vis d'un véhicule automobile classique.

Pendant les accélérations, il n'en est pas de même, mais l'échelonnement des commutations de moteurs hydrauliques, de leurs puissances et de leur nombre peut être optimisé pour qu'il y ait là aussi gain appréciable par rapport à une automobile classique.

A la lecture de ce qui précède, on comprend que le véhicule économique, objet de l'invention, présente des performances tout à fait remarquables pour son conducteur. Il s'agit bien évidemment d'un véhicule à transmission automatique, mais cette transmission permet tout à la fois d'abaisser la consommation globale et de fournir des performances transitoires brillantes qui ne sont pas payées par un surcroît de consommation comme c'est le cas avec une transmission automatique classique.

En ville, ce véhicule possède des possibilités d'accélération sans commune mesure avec celles des automobiles actuelles ; sur route, les manoeuvres de dépassement peuvent se faire plus vite et donc dans de meilleures conditions de sécurité.

L'invention concerne également un système de propulsion pour véhicule à roues susceptible de circuler en phase d'accélération, de croisière et de freinage, du type comportant :

- au moins un générateur hydraulique constitué d'un moteur thermique alternatif dont les pistons entraînent cinématiquement, sans l'intermédiaire de vilebrequins, les pistons d'une pompe hydraulique, chaque cylindre moteur comportant une électrovanne d'injection ;

- un ou plusieurs moteurs hydrauliques d'entraînement des roues dont la cylindrée est modifiable au moyen de servo-moteur, ce moteur pouvant fonctionner en pompe pour une cylindrée négative et freinant le véhicule ;

- un accumulateur haute-pression intercalé entre le générateur et le moteur hydraulique ;

- un réservoir basse-pression sur le circuit de retour du fluide hydraulique du moteur hydraulique vers le générateur ;

- une pédale d'accélération ;

- une pédale de freinage ;

Selon l'invention, le générateur hydraulique a exclusivement deux points de fonctionnement à fréquence, quantité de carburant par cycle et richesse constantes, l'un correspondant à la puissance nominale définie par le point de consommation minimale du moteur, l'autre correspondant à un fonctionnement à puissance réduite ou nulle, la pompe associée au moteur thermique fournissant une puissance hydraulique constante de telle sorte que le mouvement du piston thermique soit indépendant de la pression de refoulement et il est prévu des moyens pour réaliser la condition que le couple transmis est indépendant de la pression et uniquement sensible à l'enfoncement de la pédale d'accélération, de manière à assurer la transformation sans à coup du fonctionnement digital du générateur hydraulique en fonctionnement analogique de la transmission du couple aux roues.

Pour mettre en oeuvre le procédé de l'invention, le système de propulsion comporte des moyens pour assujettir la puissance moyenne de sortie de la pompe à être proportionnelle au signal d'écart entre un signal de pression de consigne, fonction prédéterminée optimale de la vitesse, et un signal d'un transmetteur de pression de l'accumulateur d'accélération.

De façon plus particulière, il comporte des moyens pour assujettir la puissance moyenne de sortie de la pompe à être proportionnelle à un signal d'écart entre un signal de pression de consigne, fonction de la vitesse et de la position de la pédale d'accélération et un signal d'un transmetteur de pression de l'accumulateur.

Avantageusement, le système de propulsion comporte quatre moteurs hydrauliques dont deux identiques à l'arrière, dimensionnés pour produire une puissance mécanique totale sur les roues arrière égale à la puissance mécanique du moteur thermique et qui correspond à la vitesse de croisière maximale du véhicule, au travers d'une commutation aux deux accumulateurs haute-pression, et deux moteurs hydrauliques à l'avant, plus puissants que les moteurs arrière et alimentés uniquement par l'accumulateur d'accélération.

Les deux moteurs arrière, surtout utilisés en vitesse stabilisées, sont commandés par l'accumulateur de croisière et peuvent aussi être commandés par l'accumulateur de grande capacité pour produire de faibles accélérations (moteurs avant non utilisés) ou de grandes accélérations ou décélérations, s'ils fonctionnent en parallèle avec les moteurs avant.

Pour obtenir le meilleur rendement de transmission en vitesse stabilisée, les moteurs avant qui ne fonctionnent pas (cylindrée nulle) sont avantageusement déconnectés hydrauliquement et mécaniquement. La déconnexion hydraulique est obtenue en isolant la haute pression de l'entrée des moteurs et en réunissant l'entrée et la sortie avec le réservoir basse pression. La déconnexion mécanique est obtenue en débrayant mécaniquement avec un dispositif connu, l'arbre de sortie du moteur ou du réducteur de la roue du véhicule.

Selon une autre disposition, plusieurs moteurs de puissance distincte ou identique sont montés de façon à pouvoir fonctionner ensemble ou séparément sur un différentiel actionnant les roues du véhicule, la commutation des moteurs se faisant de façon que la cylindrée moyenne des moteurs en service soit la plus élevée possible.

Les caractéristiques et avantages de l'invention seront mieux compris à l'aide de la description qui va être faite de plusieurs modes de réalisation d'un système de propulsion conforme à l'invention, en référence aux dessins annexés sur lesquels :

- la figure 1 est un schéma de la transmission hydraulique de l'énergie depuis les moteurs thermiques jusqu'aux moteurs hydrauliques des roues ;

- les figures 2A, 2B, 2C présentent le fonctionnement du véhicule en période d'accélération ;

- les figures 3A, 3B sont des schémas de fonctionnement du véhicule en période de croisière ;

- les figures 3C, 3D sont des schémas de fonctionnement du véhicule en période de freinage ;

- les figures 4a et 4b sont des coupes respectives AA et BB d'un premier mode de réalisation d'un moteur thermique du véhicule de l'invention ;

- les figures 5a et 5b sont des coupes axiales d'un second mode de réalisation d'un moteur thermique de véhicule de l'invention, à deux phases différentes de fonctionnement ;

- les figures 6a, 6b, 6c sont des coupes respectives AA,BB,CC d'un troisième mode de réalisation d'un moteur thermique de l'invention ;

- la figure 7 représente un système de butée hydraulique ;

- la figure 8a est une vue AA d'un mode de réalisation d'une pompe à puissance constante d'un véhicule de l'invention ;

- la figure 8b est une vue de dessus de ladite pompe,

- la figure 8c est une vue partielle de face de la pompe, et

- la figure 8d est une coupe DD de la pompe ;

- les fig. 9a, 9b, 9c, 9d, 9e, 9f représentant la loi d'évolution de la pression de l'accumulateur d'accélération en fonction de la vitesse du véhicule dans différentes situations déjà commentées.

La première partie de la description explicite, ci-après, dans le détail, un mode de réalisation des fonctions nécessaires à l'optimisation du rendement d'ensemble du véhicule selon l'invention. Les composants utilisés sont disponibles sur le marché et la complexité apparente des circuits fonctionnels proposés ne doit pas laisser croire que ces circuits seront fragiles et onéreux. De tels équipements sont très classiques pour l'homme de l'art depuis quelques années grâce notamment aux progrès de l'électronique (microprocesseurs par exemple).

Ainsi, ce qui doit être retenu comme une caractéristique de l'invention, tient à la proposition de régler en permanence deux variables : la pression hydraulique et la vitesse du véhicule en fonction des diverses conditions de la circulation du véhicule et dans le but d'optimiser dans tous les cas la consommation de carburant.

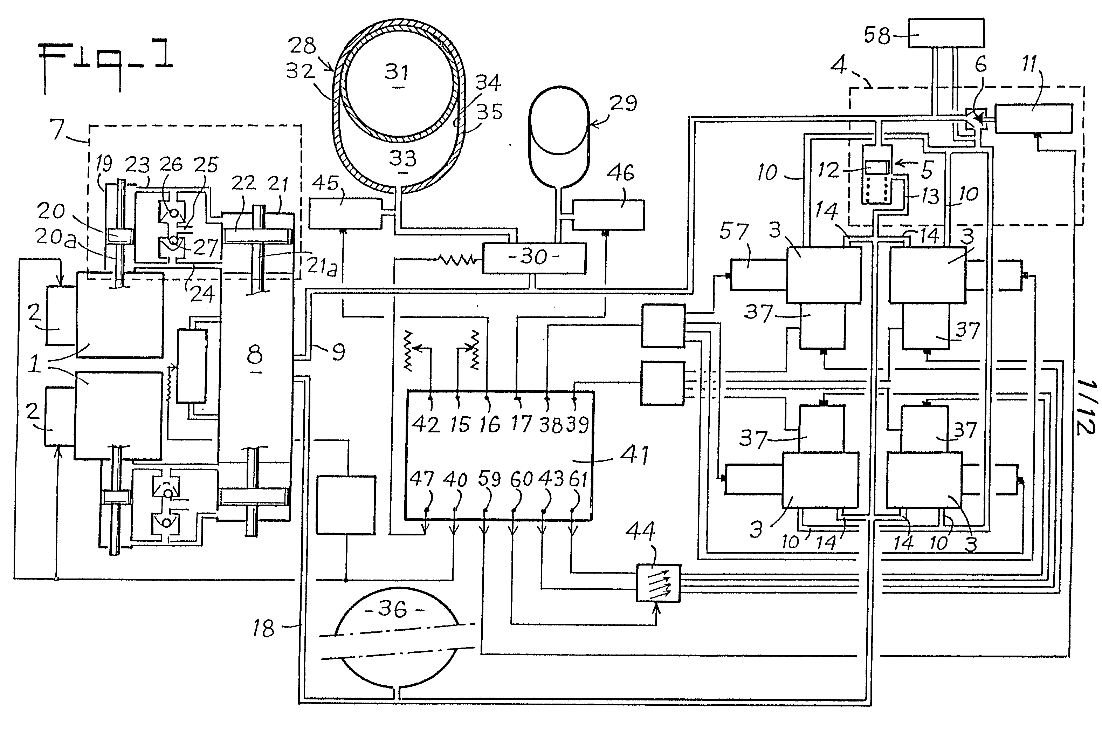

La figure 1 montre schématiquement l'ensemble des organes permettant de transmettre l'énergie hydraulique disponible à la sortie du ou des moteurs thermiques 1, aux moteurs hydrauliques avant 3 des roues avant et aux moteurs hydrauliques arrière 3 des roues arrière. On peut disposer d'un ou de plusieurs moteurs thermiques suivant la nature de ceux-ci et les problèmes d'équilibrage posés. Il a été représenté sur la figure 1 symboliquement deux moteurs à un seul piston, ces moteurs étant opposés l'un à l'autre.

Chaque moteur thermique à piston libre 1 est relié à une pompe hydraulique 8, soit directement, soit, comme représenté, par un transmetteur hydraulique de puissance 7, ce qui évite de placer la pompe dans l'axe des moteurs thermiques et d'allonger excessivement l'ensemble.

Là encore, il est avantageux de disposer les pistons de la pompe double 8, comme les moteurs, en opposition de phase de manière à éviter les vibrations du véhicule, ou bien de prendre plusieurs pompes opposées.

La pompe 8 refoule de l'huile haute pression par une canalisation haute pression 9 et des embranchements terminaux 10 , aux moteurs hydrauliques 3 , lesquels sont reliés par des embranchements basse pression 14 , donnant dans une canalisation basse pression 18, au côté aspiration de la pompe 8.

Le transmetteur hydraulique de puissance 7 comprend, d'une part, un émetteur constitué par un ensemble cylindre 19 - piston 20, le piston 20 étant accouplé mécaniquement par la tige 20a par exemple, au piston thermique du moteur thermique 1 ; d'autre part, un récepteur constitué par un ensemble cylindre 21 - piston 22, le piston 22 étant accouplé mécaniquement par la tige 21a par exemple, à la pompe 8. Une tuyauterie 23 relie une première chambre de l'émetteur à une première chambre du récepteur, et une tuyauterie 24 relie la deuxième chambre de l'un à la deuxième chambre de l'autre. Les chambres et les tuyauteries étant remplies d'huile peu compressible, il est clair que les mouvements alternatifs du piston 20 de l'émetteur se transmettent au piston 22 du récepteur. Afin de tenir compte des effets des variations de température de l'huile, et des fuites externes dues à une étanchéité imparfaite entre les tiges de piston et les corps des cylindres, les tuyauteries 23 et 24 sont reliées par des clapets à billes 26 et 27 à une conduite 25 dérivant du réservoir d'huile basse pression, décrit plus loin.

Les phénomènes de dérive de la position d'équilibre du piston récepteur, résultant des fuites internes dues à un défaut d'étanchéité entre les deux chambres de chaque cylindre émetteur ou récepteur, sont combattus par un ensemble de ressorts (non représenté) accouplé au piston récepteur et qui fixe la position milieu autour de laquelle doit s'effectuer le mouvement du récepteur. Naturellement, la force développée par cet ensemble est négligeable vis à vis des efforts de pression développés, sa raideur étant d'ailleurs d'autant plus petite que le débit de fuites internes est plus faible.

Sur la canalisation haute pression 9, et juste en aval de la pompe 8, un embranchement conduit par l'intermédiaire d'une électrovanne à trois voies 30 à un premier accumulateur oléopneumatique haute pression 28, utilisé comme il sera expliqué plus loin pour l'accélération et le freinage, et à un second accumulateur haute pression 29, utilisé pour les vitesses de croisière.

L'accumulateur d'accélération et freinage 28, destiné à fournir l'énergie nécessaire pour passer de la vitesse nulle à une vitesse déterminée $V_1$ et à récupérer cette énergie, au rendement près, pendant le freinage de $V_1$ à 0, doit avoir un volume de 15 à 25 litres (pour une pression maximale de 330 bars et une pression de gonflage de 145 bars), tandis qu'un volume de 3 à 5 litres (et une même pression de gonflage) suffit pour l'accumulateur de croisière 29, ces valeurs correspondant à un véhicule de 1500 kg à pleine charge, utilisant des équipements hydrauliques standards.

Bien que les accumulateurs soient de principe connu, il est clair que leur utilisation est d'autant plus rentable qu'ils sont allégés par rapport aux accumulateurs classiques à structure en acier. Aussi les accumulateurs oléopneumatiques conformes à l'invention comprennent, comme représenté plus en détail pour l'accumulateur 28, une chambre à azote 31 séparée par une membrane 32 en élastomère de la chambre à fluide hydraulique 33, constituée par une structure métallique 34 sur laquelle est bobinée une enveloppe en kevlar, fibre de verre ou de carbone,suivant la technique connue du bobinage filamentaire.

Par exemple, un accumulateur de 20 litres à structure bobinée en kevlar pèse au plus 25 kg et présente des garanties de sécurité supérieures et des pertes thermiques nettement inférieures à celles d'un accumulateur conventionnel, qui pèse au moins 80 kg.

Un réservoir basse pression 36 est branché sur la canalisation basse pression 18 et est destiné à récupérer, lorsque le véhicule est au repos, l'huile qui se trouve, en fonctionnement,dans les deux accumulateurs 28 et 29. En tenant compte d'une réserve pour fuite, le volume d'huile qui occupe le réservoir basse pression 36 est de 10 litres. Le réservoir est pressurisé pour éviter les problèmes de cavitation dans la pompe, et la pression en fonctionnement (réservoir vide) étant de 2 bars et, au repos, de 5 bars.

Les moteurs hydrauliques 3 sont des moteurs hydrauliques à cylindrée variable de type conventionnel.

Ils ne font pas partie de l'invention per se, aussi ne seront-ils pas décrits en détail. Toutefois, il est utile d'avoir la possibilité d'inverser la cylindrée qui permet la réversibilité moteur/pompe.

La variation de la cylindrée s'obtient par exemple par la variation d'inclinaison d'un plateau,dont la manoeuvre s'effectue sur un servo-vérin 37. Si la variation d'inclinaison ne s'effectue que dans un sens (pas de cylindrée négative), il faut alors inverser les entrées haute et basse pressions avec une électrovanne 3 voies, pour avoir la réversibilité moteur/pompe.

L'inclinaison pouvant être positive ou négative, le moteur peut servir, soit en moteur pendant les phases d'accélération et de croisière, soit en pompe pendant les phases de freinage. Aussi l'inclinaison du plateau est reliée par des moyens expliqués ultérieurement aux pédales d'accélération et de freinage du véhicule.

Il y a de nombreuses façons de monter les moteurs hydrauliques sur le véhicule.

On a représenté sur la figure 1 quatre moteurs, un par roue : les moteurs peuvent être identiques à l'avant et à l'arrière, ce qui offre deux combinaisons de couples ; les moteurs peuvent être plus puissants à l'avant qu'à l'arrière, ce qui améliore les caractéristiques de freinage (lequel doit être plus important sur les roues avant que sur les roues arrière), et offre trois combinaisons de couples.

Dans un troisième mode de réalisation, au lieu de prévoir un moteur par roue, on dispose , par exemple, trois moteurs au centre du véhicule, de puissance différente, et qui commandent les roues du véhicule par l'intermédiaire d'un réducteur unique et d'un différentiel ; ce qui offre sept combinaisons de couples , les moteurs non utilisés étant déconnectés hydrauliquement et mécaniquement.

Le fonctionnement de l'ensemble représenté à la figure 1 est le suivant :

Lorsqu'on met en route le moteur thermique (véhicule arrêté), les pompes débitent dans l'accumulateur haute pression 28 pendant quelques secondes jusqu'à la pression maximale. Dès que celle-ci est atteinte, le moteur thermique s'arrête ou est mis en court-circuit (pour éviter des problèmes de redémarrage).

La valeur affichée $\beta a$, correspondant à l'enfoncement de la pédale d'accélération, est rentrée en 42 dans un organe de calcul 41 et convertie à la sortie 43 en un signal d'inclinaison relative de plateau $\alpha$ a des moteurs hydrauliques, lequel signal est distribué aux servo- vérins des moteurs, par l'intermédiaire d'un commutateur 44 commandé par l'organe de calcul, qui sélectionne les moteurs hydrauliques à mettre en oeuvre, en coupant ou en alimentant les commandes électriques d'inclinaison des plateaux des moteurs, de manière à fonctionner toujours au rendement optimal.

Le véhicule démarre et utilise l'énergie de l'accumulateur d'accélération 28, dont l'énergie potentielle se transforme en énergie cinétique suivant un processus de détente isentropique.

Afin que l'accumulateur ne se vide pas, avant d'avoir atteint la vitesse désirée, c'est-à-dire pour éviter que sa pression ne descende jusqu'à la pression de gonflage, la pompe, qui avec le générateur thermique fonctionne en tout ou rien, se remet en route dès que la pression de l'accumulateur 28 mesurée par un capteur 45 est inférieure d'une valeur préétablie à une pression de consigne donnée, et s'arrête dès que la pression dépasse d'une valeur prédéterminée la pression de consigne $P_c$. Les ordres de mise en route et d'arrêt du (des) moteur(s) thermique(s) sont donnés par l'organe de calcul 41 aux électrovannes d'injection 2 du (des) moteur(s) thermique(s) 1 en réponse aux indications du capteur de pression 45.

Afin d'obtenir une accélération constante en fonction d'un enfoncement $\beta_a$ de la pédale d'accélération, il convient que la valeur $a_a$ de l'inclinaison de plateau délivrée en sortie 43 par l'organe de calcul 41 soit de la forme $a_a = \frac{P_M}{P} \beta_a$ où $P_M$ est la pression maximale et P la pression variable de l'accumulateur d'accélération 28.

Une fois que le véhicule a atteint la vitesse voulue et qu'on désire s'y maintenir, le conducteur relâche la pédale pour une nouvelle position $\beta_r$ qui permet de réaliser l'égalité du couple moteur et du couple résistant. Cependant, on sait que le rendement d'un moteur hydraulique diminue si la cylindrée diminue. C'est pourquoi, afin d'augmenter celle-ci, qui est représentée par une inclinaison relative de plateau égale à $\alpha r = \dfrac{P_M \cdot r}{P}$ , on branche sur le circuit haute pression 9 l'accumulateur de croisière 29 qui est maintenu à une pression $P'_o$ contrôlée par un capteur 46 et inférieure à P, au lieu de l'accumulateur d'accélération 28, et ce, au moyen de l'électrovanne à trois voies 30, commandée par la sortie 47 de l'organe de calcul 41. On obtient la cylindrée maximale lorsque $\alpha = 1$ avec $P'_o = P_M \beta r$ .

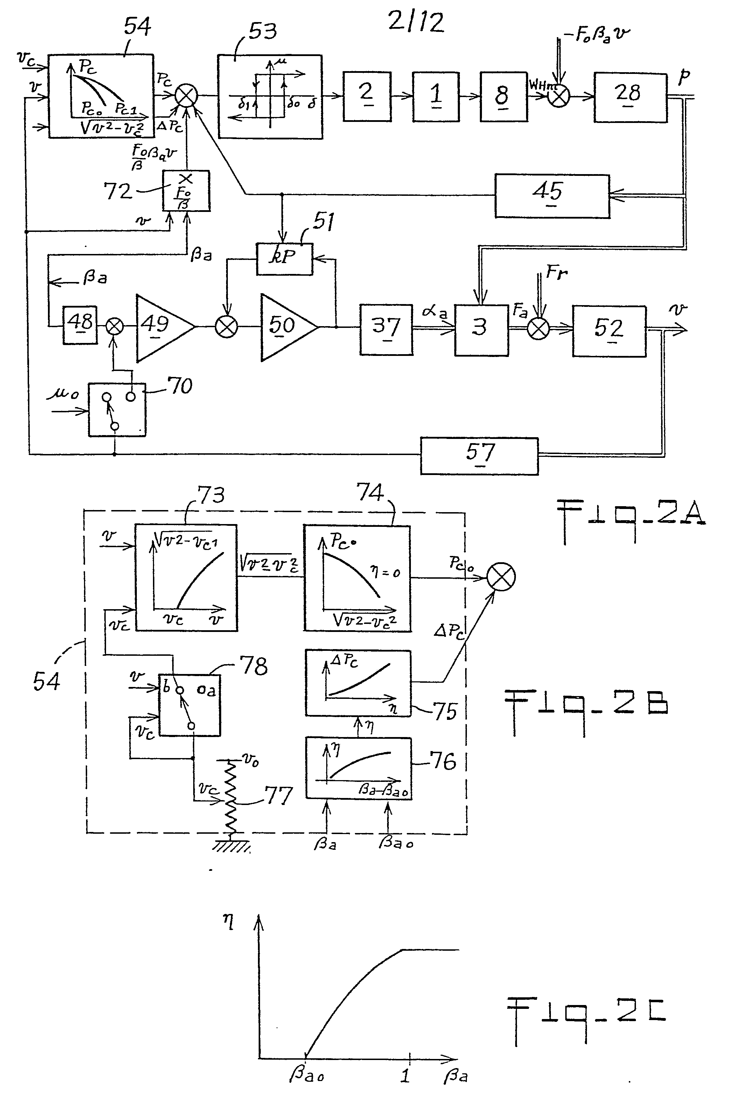

La figure 2A est un schéma synoptique du fonctionnement en accélération, où sont désignés par les mêmes symboles les signaux électriques des variables et les variables elles-mêmes, les traits simples représentant les liaisons des signaux électriques et les traits doubles représentant les liaisons des variables elles-mêmes.

La pression P de l'accumulateur d'accélération 28 et la vitesse $V$ du véhicule sont des variables de sorties fonctions de la variable d'entrée qui est l'enfoncement $\beta_a$ de la pédale d'accélérateur, transformé par un transmetteur électrique potentiométrique ou inductif 48 accouplé à la pédale d'accélération, en un signal électrique qui sort d'un amplificateur 49 sous forme d'un signal électrique de sortie encore désigné par $\beta a$ . Ce signal $\beta a$ est rentré dans un amplificateur asservi 50 dont la boucle de retour 51 a un gain kP proportionnel à la pression P. L'alimentation de la boucle de retour se fait par un signal électrique délivré par le capteur de pression 45 de l'accumulateur 28.

Le signal de sortie de l'amplificateur asservi 50 correspond à l'inclinaison de consigne $\alpha ac$ du plateau des moteurs hydrauliques, et est reçu par le servo-vérin 37 et transformé en inclinaison αa de plateau du moteur 3 qui est bien de la forme $\frac{P_M}{P}\alpha a$.

Le moteur hydraulique 3, sous l'action de l'inclinaison αa du plateau et du fluide sous pression P venant de l'accumulateur 28, délivre un couple qui se traduit sur le véhicule par une force $F_a$ proportionnelle à αaP, c'est-à-dire à $P_M\beta a$, donc indépendante de la pression P.

Le véhicule est représenté en 52 par sa fonction de transfert dont le signal d'entrée est (F - Fr), où Fr est la force résistante due au frottement de roulement et à la résistance aérodynamique du véhicule, et dont le signal de sortie est la vitesse $v$ laquelle est liée au signal d'entrée αa par la relation suivante :

$$ m \frac{dv}{dt} = F_o \beta_a - Fr $$

Le véhicule n'est pas asservi en vitesse car une bascule monostable 70 sensible à la tension uo de commande de l'électrovanne 30 de commutation des deux accumulateurs 28 et 29 empêche le signal de vitesse $v$ d'être comparé au signal βa à l'entrée de l'amplificateur 49.

On voit donc que l'accélération du véhicule est une fonction linéaire de la position de la pédale d'accélération, indépendante de la pression de l'accumulateur, dont les fluctuations ont été compensées par des fluctuations en sens inverse de l'inclinaison des plateaux grâce à l'amplificateur 50 à retour de pression.

Le véhicule est donc insensible au fonctionnement en saccade du moteur thermique 1 lequel engendre la pression asservie P par un dispositif comprenant :

         - un amplificateur 53 à seuil et hystérésis centré autour de la valeur zéro fournissant une tension constante à l'électrovanne d'injection 2 qui commande le moteur 1 dès que la différence $P_c-P$ excède une valeur positive égale à $\delta_o$. La tension de l'électrovanne 2 est coupée si l'écart $P_c-P$ est négatif et prend une valeur absolue égale à $\delta_1$.

         A la sortie de la pompe 8, la puissance hydraulique est formée de créneaux en tout ou rien ou en impulsion de durée, de sorte que c'est la valeur moyenne $W_{Hm}$ de ces créneaux qui est proportionnelle à l'écart $\delta$ et qui est envoyée dans l'accumulateur d'accélération 28. Comme les moteurs hydrauliques absorbent une puissance $F_o\beta_a v$ où $F_o$ est la force maximale développée par les moteurs hydrauliques, la puissance reçue par l'accumulateur 28 est égale à $W_{Hm}-F_o\beta_a v$ , ce qui correspond à une pression P.

         Pour que cette pression P soit très proche de $P_c$, il faut ajouter à l'entrée de l'amplificateur 53 un signal $\dfrac{F_o\beta_a v}{B}$ résultant d'un multiplicateur, de type connu effectuant le produit des deux signaux $\beta_a$ et $v$, et où $\beta$ est le gain moyen égal au rapport entre la puissance $W_{*m}$ et l'écart $\delta$ .

         Le générateur de fonction 54 fournit un signal $P_c$ correspondant au fonctionnement économique ou en fonctionnement en surpuissance. Le signal de départ peut donc être $v=0$ ou $v=v_c$, de sorte que l'accumulateur 28 peut se vidanger entre 0 et $v_o$ (fig.9c) ou entre $v_c$ et $v_3$ (fig. 9f), avec la même variation d'énergie cinétique.

         Le générateur de fonction 54 de la figure 2A comporte quatre générateurs de fonctions secondaires, représentés sur la fig. 2B.

En fonctionnement économique, il n'y a que deux générateurs de fonction qui sont en service . Le générateur de fonction 73, à partir d'un signal $\upsilon - \upsilon_c$ fournit un signal $\sqrt{\upsilon^2 - \upsilon_c^2}$ qui sert de signal d'entrée au second générateur de fonction 74 qui délivre un signal Pco.

En fonctionnement en surpuissance, le signal $\Delta P_c$ complémentaire (et nécessaire pour faire fonctionner l'accumulateur 28 selon la courbe g de la figure 9D au lieu de la courbe a) est fourni par un troisième générateur de fonction 75 à partir d'un signal $\eta$ fourni par un quatrième générateur de fonction 76 sensible à l'écart $\beta a - \beta ao$ ; le signal $\beta ao$ étant le signal de consigne en dessous duquel on a toujours $\eta = o$ (cf. Fig. 2c)·Sur la figure 9D, la courbe a correspond à $\eta = 0$ , et la courbe h à $\eta > o$. Le signal de consigne $\upsilon_c$ provenant d'un capteur 77 potentiométrique ou inductif (manoeuvré par exemple manuellement par le conducteur) est transmis au premier générateur de fonction 73 par l'intermédiaire d'une bascule monostable du type classique 78, symbolisée par un contacteur où les points o et b sont réunis quand $\upsilon > \upsilon_c$. Le signal $\upsilon_c$ est alors transmis au premier générateur de fonction 73 et on obtient alors un signal de sortie $\sqrt{\upsilon^2 - \upsilon_c^2}$ ; le contacteur réunit les points 0 et a si le signal $\upsilon_c$· n'est pas transmis. Le générateur 73 transmet alors directement le signal $\upsilon$ au lieu de $\sqrt{\upsilon^2 - \upsilon_c^2}$

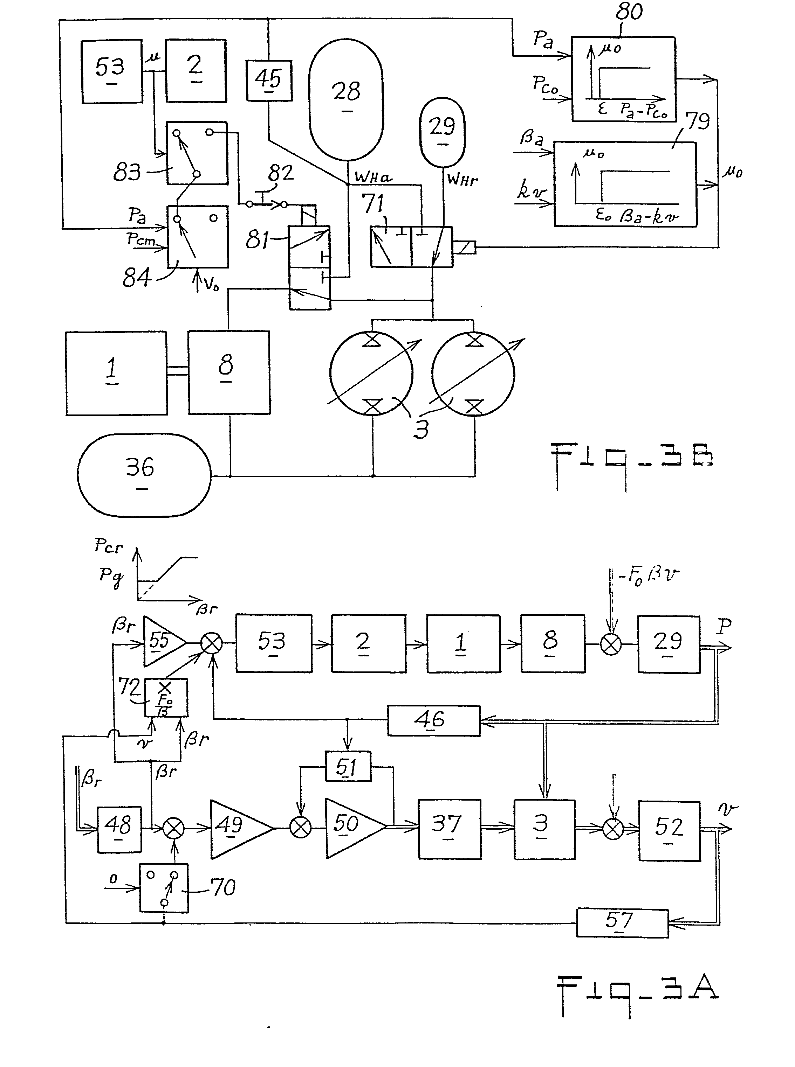

La figure 3A est un schéma fonctionnel du régime de croisière. Très semblable à celui de la figure 2A, il s'en distingue par le fait que :

- l'accumulateur haute pression d'accélération 28 est remplacé par l'accumulateur de croisière 29 ;

- le générateur de fonction est remplacé par un amplificateur à gain constant 55 qui fournit un signal électrique représentant la pression de consigne Pcr en croisière, égale à $P_8r$ de manière à optimiser le rendement de transmission. Le gain n'est constant qu'à partir d'une certaine valeur de $\beta r$ car le signal de pression de consigne ne peut jamais être nul, il peut au plus être tel que la pression de consigne est égale à la pression de gonflage $P_*$ de l'accumulateur.

- L'amplificateur de gain 49 reçoit à son entrée un signal résultant de la comparaison entre le signal fourni par le transmetteur 48 de la pédale d'accélération et le signal fourni par le capteur de vitesse 57 grâce au fait que la tension de commande de l'électrovanne 30 est devenue nulle, ce qui permet de transmettre le signal $\mathcal{U}$ à travers la bascule 70.

Le véhicule est alors soumis à une vitesse proportionnelle à la position de la pédale d'accélération et, comme en régime d'accélération est insensible aux saccades de fonctionnement du moteur thermique.

Le remplacement de l'accumulateur 28 par l'accumulateur 29 s'effectue comme indiqué à la figure 3B. Deux comparateurs à seuil 79,80 peuvent transmettre en parallèle, ou indépendamment une tension $\mathcal{U}o$ à l'électrovanne de commutation 30 des deux accumulateurs 28 et 29.

Le comparateur 79 fournit la tension $\mathcal{U}o$ lorsque la différence $\beta a - k\mathcal{U}$ est supérieure à une valeur $\varepsilon o$ voisin de zéro. Lorsque $\beta a$ est égal à $k\mathcal{U}$, le régime de croisière est atteint et l'électrovanne 30 n'est plus alimentée. L'accumulateur 29 est alors mis en circuit.

Le comparateur 80 fournit la tension $\mathcal{U}o$ lorsque la différence entre le signal de pression Pa de l'accumulateur 28 et le signal de consigne Pco (pression de consigne économique) est supérieur à une valeur $\varepsilon$ voisine de zéro. En régime économique d'accélération on a Pa = Pco et le comparateur 80 fournit une tension nulle mais la tension uo est transmise par le comparateur 79. Par contre, si le véhicule effectue une accélération en surpuissance, l'électrovanne 30 est alimentée sous la tension uo par les deux comparateurs 79 et 80. Si après cette accélération en surpuissance, le véhicule se stabilise à une vitesse de croisière $v_1$, le comparateur 79 délivre une tension nulle, mais l'électrovanne 30 continue à être alimentée par le comparateur 80 tant qu'on a $Pa = Pco + \Delta Pc \geqslant Pco$. L'accumulateur 28 continue à alimenter les moteurs hydrauliques jusqu'à ce que la pression Pa soit redescendue à la valeur Pco correspondant à la vitesse $v_1$. L'électrovanne 30 n'est alors plus sous tension et c'est l'accumulateur 29 qui prend le relais pour alimenter les moteurs hydrauliques.

On a vu la possibilité d'avoir une surpuissance transitoire pendant le régime d'accélération ; dans le régime de croisière, il est aussi intéressant de stocker une énergie supplémentaire qu'on utilisera ensuite pour disposer d'une surpuissance transitoire ; c'est par exemple le cas où l'on veut dépasser rapidement le véhicule derrière lequel on est bloqué. Pour cela on remplit l'accumulateur d'accélération 28 pendant le temps où l'on est bloqué à vitesse de croisière (et où l'on fonctionne donc sur l'accumulateur de croisière 29). La figure 3B montre comment y parvenir : Si le véhicule roule à 60 km/hm la puissance Whr délivrée par l'ensemble moteur thermique-pompe correspond à des créneaux de faible durée ; le remplissage de l'accumulateur d'accélération s'effectue pendant les périodes où le moteur thermique serait arrêté en fonctionnement de croisière normale. Il suffit d'intercaler dans le circuit de l'accumulateur d'accélération une seconde électrovanne 81 trois voies qui, au repos, alimente normalement les moteurs hydrauliques et l'accumulateur de croisière. L'électrovanne 81 est manoeuvrée à condition d'avoir fermé un interrupteur manuel 82 qui permet le passage du courant dans l'électrovanne sous une tension $V_o$. Cette tension $V_o$ est transmise sous condition par deux bascules monostables 83,84 placées en série. La première 83 autorise le passage du courant vers l'électrovanne 81 si le signal de sortie de l'amplificateur 53 est nul. Ce signal nul correspond à la période au cours de laquelle l'accumulateur de croisière est en train de se vider.

Lorsque l'accumulateur de croisière est vide, et si l'accumulateur d'accélération n'est pas encore rempli, la tension $\underline{u}$ de l'amplificateur réapparaît et l'électrovanne 81 revient au repos en rétablissant le circuit hydraulique de l'accumulateur de croisière.

La seconde bascule 84 interrompt le passage du courant lorsque l'accumulateur d'accélération est rempli ; c'est-à-dire lorsque le signal d'écart entre le signal de consigne de pression $P_{cm}$ (maximale) et le signal du capteur de pression $P\underline{a}$ est nul.

Comme il a été dit plus haut, il est particulièrement avantageux d'utiliser les moteurs hydrauliques 3 pour le freinage du véhicule. On sait que par inversion de l'inclinaison du plateau d'un moteur hydraulique, le couple moteur devient un couple de freinage ; ainsi, si la vitesse $v_1$ a été acquise par la vidange d'un accumulateur, le moteur fonctionne pendant le freinage d'une vitesse $v_1$ à 0 en pompe et permet de restituer, aux pertes près, l'énergie potentielle à l'accumulateur.

Il est surtout intéressant de récupérer l'énergie cinétique de freinage aux basses vitesses entre 0 et 60 km/h par exemple, néanmoins sur route où il y a des agglomérations à traverser, il peut être intéressant de récupérer l'énergie cinétique de freinage entre 90 km/h et 60 km/h par exemple. Il est alors avantageux, comme dans le cas de l'accélération, d'afficher une vitesse de consigne $v_c$ égale à 60 km/h (par un signal électrique correspondant à cette vitesse), pour laquelle le remplissage de l'accumulateur d'accélération est maximal (pression maximale). La récupération de l'énergie de freinage s'effectue alors entre une valeur $v_1 = \sqrt{v^2 - v_c^2}$ , valeur pour laquelle l'accumulateur est vide, et $\sqrt{v^2 - v_c^2} = 0$    soit    $v = v_c$

Il va être examiné le fonctionnement particulier pour $v_c = 0$    qui signifie que la récupération de l'énergie de freinage ne peut s'effectuer qu'entre $v = v_1$ et $v = 0$.

Si la vitesse à laquelle on freine est supérieure à la vitesse $v_1$, il  convient d'isoler l'accumulateur par l'électrovanne 30 et d'utiliser le dispositif dissipateur d'énergie 4 qui donne une pression sur le moteur hydraulique.

Le dispositif schématisé sur la fig. 1, et détaillée sur la fig. 3c, permet de créer une perte de charge entre le moteur hydraulique et l'accumulateur.  Il est constitué essentiellement par un pointeau mobile 6 actionné par un servo-moteur linéaire 11 et pouvant créer une perte de charge par rétrécissement de la section de passage du fluide hydraulique, le pointeau mobile étant placé sur la canalisation hautepression 9, juste en amont des embranchements terminaux 10, et un clapet de surpression 5, taré à la pression maximale $P_M$ et placé entre la canalisation basse pression 18 et un point de canalisation haute pression 9, en amont du pointeau.

Admettons que le véhicule ait une vitesse initiale $v_2$ supérieure à $v_1$.  ; il circule sur l'accumulateur de croisière 29.

Par enfoncement $\beta_f$ de la pédale de freinage, une force de freinage $F_f$ est développée. L'accumulateur de croisière qui est de faible contenance atteint très vite la pression maximale $P_M$ et tend à la dépasser.

Le piston 12 du clapet de surpression 5 se déplace alors du côté de la tuyauterie basse-pression (vers le bas sur la figure 1) et dégage l'orifice du by-pass 13, ce qui a pour effet de régler la pression à une valeur constante légèrement en excès de $P_M$, comme dans tous les clapets de surpression. Si on examine la figure 3D, on constate que le schéma fonctionnel est pratiquement le même que celui de l'accélération avec pour première différence que le signal $\beta\underline{a}$ est remplacé par le signal $\beta_F$ (freinage) lequel est négatif par rapport à $\beta a$, et avec seconde différence qu'on trouve le dispositif de perte de charge à plateau asservi en pression différentielle par le servo-moteur. En vertu de la loi $\alpha_F = \dfrac{P_M}{P} \beta_F = \beta_F$ puisque $P_M = P$, la valeur de la cylindrée est minimale et on a donc un couple résistant constant développé par les moteurs hydrauliques fonctionnant en pompe et donc une force résistante constante sur le véhicule.

La vitesse devenant inférieure à $v_1^-$, l'électrovanne 30 isole l'accumulateur de croisière 29 et met en communication l'accumulateur d'accélération-freinage 28. La pression de cet accumulateur étant faible, l'inclinaison des plateaux des moteurs hydrauliques s'accroît, et prend, en butée, sa valeur maximale.

Pour maintenir le couple de freinage à une valeur constante, il faut donc augmenter artificiellement la pression au refoulement du moteur fonctionnant en pompe, c'est-à-dire créer une perte de charge $P_F - P$ par le dispositif à pointeau qui, jusqu'à présent, était resté immobile. Le dispositif à pointeau est commandé de la manière suivante. Lorsque le plateau est en butée, c'est-à-dire $\alpha_F = -1$,

le signal Fc de consigne $\alpha$Fc est négatif et a une valeur absolue plus grande que l'unité. On applique le signal 1 + $\alpha$Fc à l'entrée d'un amplificateur 90 dont la particularité est de fournir une tension proportionnelle sous l'action de signaux négatifs 1 + $\alpha$Fc et une tension nulle si le signal 1 + $\alpha$Fc est positif. Le signal $u_1$ recueilli est appliqué à un amplificateur 91 dont le gain est proportionnel au signal du transmetteur de pression 45 de l'accumulateur d'accélération et permet d'obtenir un signal proportionnel à ($\alpha$Fc + 1)P lequel constitue le signal de consigne qui doit être égal à la perte de charge $P_F$-P pour conserver un couple constant. La condition pour obtenir ($\alpha$Fc+1)P = $P_F$-P est de comparer le signal de consigne précité à celui d'un transmetteur électrique 92 de la pression différentielle $P_F$-P, le signal d'écart ainsi obtenu est amplifié par un amplificateur 23 qui alimente le servo-moteur 11 à pointeau qu'il déplace alors jusqu'à ce que le signal d'écart soit nul et qui correspond à la condition évoquée.

Au fur et à mesure que le véhicule freine, la pression P s'accroît dans l'accumulateur et le signal $\alpha$Fc + 1 diminue en valeur absolue jusqu'à s'annuler, ce qui annule également la perte de charge. A partir de 1 + $\alpha$Fc $\geqslant$ 0, le couple de freinage correspond à la récupération maximale de l'énergie cinétique.

Le fonctionnement du clapet de surpression et du pointeau correspond à une dissipation de l'énergie hydraulique en chaleur dans le fluide. Aussi pour maintenir la température à peu près constante malgré la dissipation de l'énergie de freinage, il faut véhiculer le fluide hydraulique sortant du clapet de surpression et de la vanne à pointeau à travers un radiateur convecteur 94 de type connu pour évacuer à l'extérieur les calories provenant de la dissipation d'énergie (fig. 3c).

Les différents signaux qui contrôlent la pression et la vitesse du véhicule sont analogiques pour les générateurs de fonction et tout ou rien pour les commandes des électrovannes d'injection de carburant et de commutation des moteurs hydrauliques. Il est avantageux d'utiliser la technique du calcul digital pour calculer les différents signaux analogiques ou tout ou rien en utilisant un organe de calcul 41 comprenant un multiplexeur, un micropresseur et un décodeur et qui rassemble les différents éléments électroniques déjà vus dans les schémas synoptiques et les commute dans les courants de pression et de vitesse pour avoir un fonctionnement de transmission au rendement optimal. Il a également pour fonction de commander l'électrovanne à trois voies 30, de commander la commutation 44 des moteurs hydrauliques, de commander les électrovannes d'injection et de réguler la course du générateur thermique en fournissant les signaux électriques à une servovalve ou une électrovalve Vernier d'injection de carburant.

L'organe de calcul 41 reçoit notamment à son entrée 42 les signaux de position $\beta a$ de la pédale d'accélération ; en 15, les signaux de position $\beta f$ de la pédale de freinage ; en 16, les signaux correspondant à la pression de l'accumulateur d'accélération ; en 17, ceux de l'accumulateur de croisière ; en 38, les signaux des capteurs de vitesse 57 (par exemple des dynamos tachymétriques) ; et en 39 des signaux correspondant à la position $\alpha f$ des plateaux des moteurs hydrauliques.

Les signaux de sortie de l'organe de calcul 41 sont : en 47, le signal de commande de l'électrovanne 30 du circuit des accumulateurs ; en 40, le signal de commande des électrovannes d'injection du générateur ; en 59, la commande du servo-moteur 11 de freinage complémentaire ; en 60, les signaux de commutation des moteurs hydrauliques ; en 43 et 61, les signaux de consigne pour l'inclinaison des plateaux des moteurs hydrauliques respectivement en accélération et en freinage.

La signification des différents schémas de fonctionnement précédemment étudiés, s'appuie sur les considérations scientifiques suivantes.

Ces schémas résultent de deux relations : l'une concerne la vidange ou le remplissage de l'accumulateur d'accélération et l'autre, le mouvement du véhicule :

$$(1) \qquad \frac{Vo}{\gamma}\left(\frac{P}{P_M}\right)^{-\frac{1}{\gamma}} \frac{dP}{dt} + m\,\upsilon\,\frac{d\upsilon}{dt} + Wm + Wp = W_{Hm}$$

$$(2) \qquad m\,\upsilon\,\frac{d\upsilon}{dt} = Fo\,\alpha_a\frac{P\,\upsilon}{P_M} - Wm$$

$P_M$ est la pression maximale

$Vo$ est le volume minimal de l'accumulateur à la pression $P_M$

$P$ la pression à l'instant $\underline{t}$

$\upsilon$ la vitesse du véhicule

$\underline{m}$ la masse du véhicule

$F_O$ la force maximale développée par les moteurs hydrauliques sur le véhicule

$W_{Hm}$ est la puissance hydraulique moyenne fournie par la pompe

$Wm$ est la puissance mécanique perdue

$Wp$ est la puissance hydraulique perdue

$\gamma$ rapport des chaleurs spécifiques de l'azote à pression et à volume constant.

Ces deux relations montrent qu'il y a deux grandeurs de sortie, la pression P et la vitesse $\upsilon$ du véhicule.

Selon une caractéristique de l'invention, on veut simultanément réaliser les deux conditions suivantes :

(3)
$$\frac{Vo}{\gamma} \frac{Pc}{P_M}^{-\frac{1}{\gamma}} \frac{dPc}{dt} + (1-\eta) \, m \, \upsilon \, \frac{d\upsilon}{dt} = 0$$

(4)
$$et \quad \alpha ac = \frac{P_M}{P} \, \beta a$$

Pc étant la pression de consigne à imposer à l'accumulateur d'accélération et $\alpha$ ac la valeur d'inclinaison de consigne à imposer au plateau du moteur (cylindrée de consigne).

Dans la relation (3) la pression de consigne est telle qu'on impose au groupe moto-pompe de fournir une puissance hydraulique moyenne WHm égale à

(5)
$$WHm = W_m + Wp + \eta \, m \, \upsilon \frac{d\upsilon}{dt}$$

La signification du coefficient $\eta$ est la suivante.

Le coefficient $\eta$ est une fonction croissante de l'écart $\beta a - \beta ao$, où $\beta ao$ est une valeur de consigne telle que pour $\beta a < \beta ao$ on ait toujours $\eta = 0$. Il en résulte que la pression de consigne est alors égale à

$$Pco = P_M \left[ 1 - \frac{\gamma - 1}{VoP_M} \frac{m}{2} (\upsilon 2 - \upsilon_c 2) \right]^{\frac{\gamma}{\gamma-1}}$$

Cette relation est unique et ne dépend que de la vitesse $\upsilon$, quelle que soit la valeur de $\beta a$ tant qu'on ne dépasse pas $\beta ao$ et elle correspond à un fonctionnement réversible de remplissage et de vidange de l'accumulateur.

Lorsque $\beta a > \beta ao$ la relation devient égale à

$$Pc = P_M \left[ 1 - \frac{\gamma - 1}{VoPo} (1-\eta) \, m \, (\upsilon^2 - \upsilon^2_c) \right]^{\frac{\gamma}{\gamma-1}}$$

On constate que Pc dépend à la fois de $\beta a$ et de $\upsilon$.

40

Lorsqu'on a $\eta$ = o, la pression de consigne Pco est telle que le remplissage de l'accumulateur d'accélération pendant l'accélération du véhicule s'effectue avec une puissance $W_{Hm}$ qui compense exactement les pertes mécaniques et hydrauliques ; c'est le régime de fonctionnement économique.

Lorsqu'on a $\eta > o$ la pression de consigne Pc est telle que le remplissage de l'accumulateur d'accélération pendant l'accélération du véhicule s'effectue avec une puissance $W_{Hm}$ supérieur à la somme des pertes mécaniques et hydrauliques et si $\eta$ est suffisamment élevé, on obtient une puissance délivrée sur les roues supérieure à la puissance nominale du moteur thermique, entre deux vitesses du véhicule. C'est le régime de surpuissance transitoire.

La relation (4) permet d'avoir un mouvement du véhicule indépendant de la pression en remplaçant $\alpha_{ac} = \alpha_a$ de la relation (4) dans la relation (2) ce qui donne :

$$(6) \qquad m \frac{dv}{dt} = F_o \, \beta_a - F_r \quad \text{où} \quad F_r = \frac{W_m}{v} = \text{force}$$

résistante.

Examinons maintenant la manière de réaliser la fonction représentée par les relations (3) et (5). On assujettit la présence hydraulique moyenne $W_{Hm}$ à être proportionnelle à un signal d'écart $\delta$ qu'on écrit de la manière suivante :

$$(7) \quad W_{Hm} = B \, \delta = B \left[ P_{co} + \Delta P_c + \frac{F_o}{B} \beta_a \, v - P \right]$$

Le signal $P_{co} + \Delta P_c$ est produit par un générateur de fonction et le signal $\frac{Fo}{B} \beta_a \, v$ est produit par un amplificateur sensible au signal d'entrée $v$ et de gain proportionnel à $\beta_a$, ce qui constitue un multiplicateur de type connu des signaux $\beta_a$ et $v$. La somme de ces deux signaux soustraite du signal du transmetteur de pression de l'accumulateur d'accélération constitue le signal d'écart δ.

Comme la puissance délivrée est constituée de créneaux (en tout ou rien ou en impulsions de durée) c'est la valeur moyenne de ces créneaux qui est proportionnelle à l'écart δ. Il en résulte qu'en remplaçant $W_{H.m}$ par sa valeur (7) dans la rotation (1) on obtient :

$$\frac{V_o}{\gamma}\left(\frac{P}{P_H}\right)^{-\frac{1}{\gamma}} = -(1-\eta)\ m\upsilon\frac{d\upsilon}{d.} = B\ (P_c - P)$$

Il convient de choisir un gain moyen $B$ le plus grand possible de manière à ce qu'on puisse écrire approximativement $P_c = P$.

Il en résulte que la relation (7) est équivalente à la relation (5).

Ainsi qu'il a été dit, il faut, pour faire fonctionner le véhicule de l'invention au rendement maximum :

- utiliser le moteur thermique à fréquence et à charge constante, donc à fonctionnement interrompu,

- diminuer les pertes thermiques.

Les différents modes de réalisation de générateur décrits ci-après répondent à cette double préoccupation.

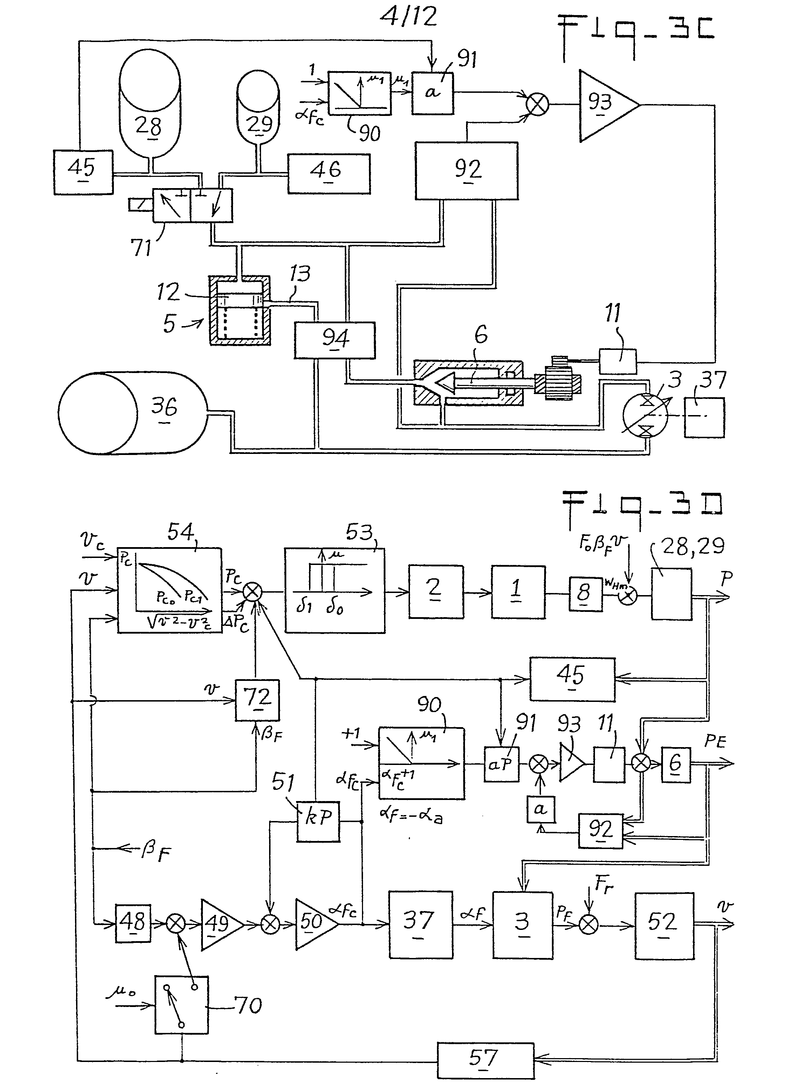

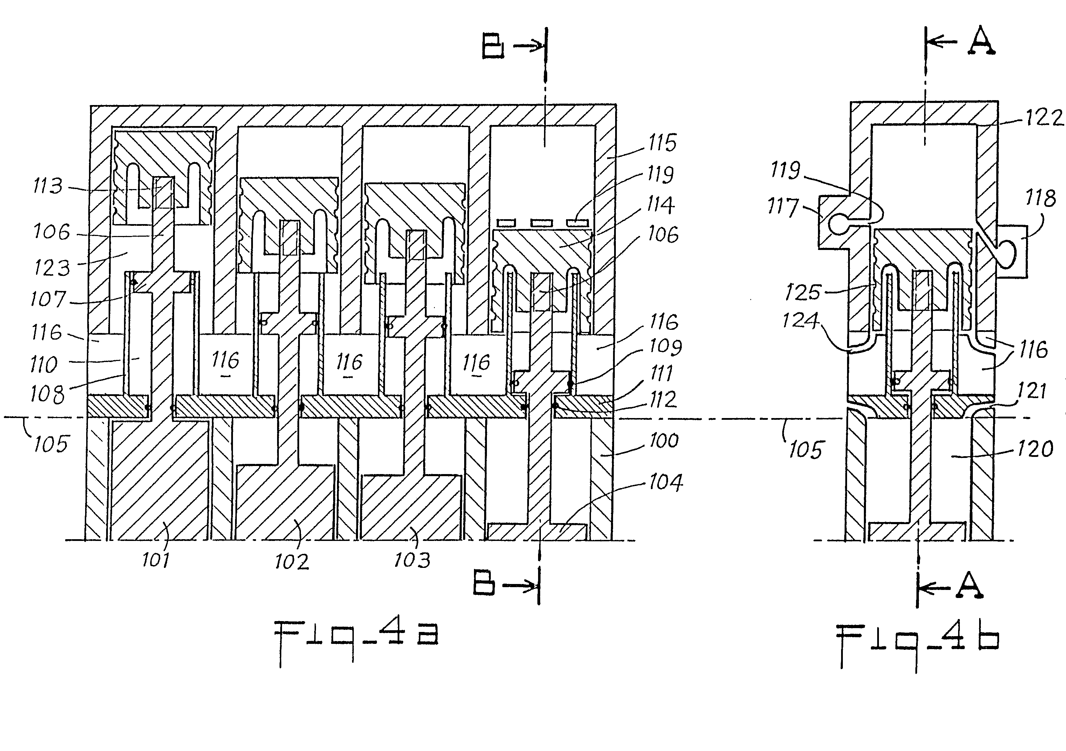

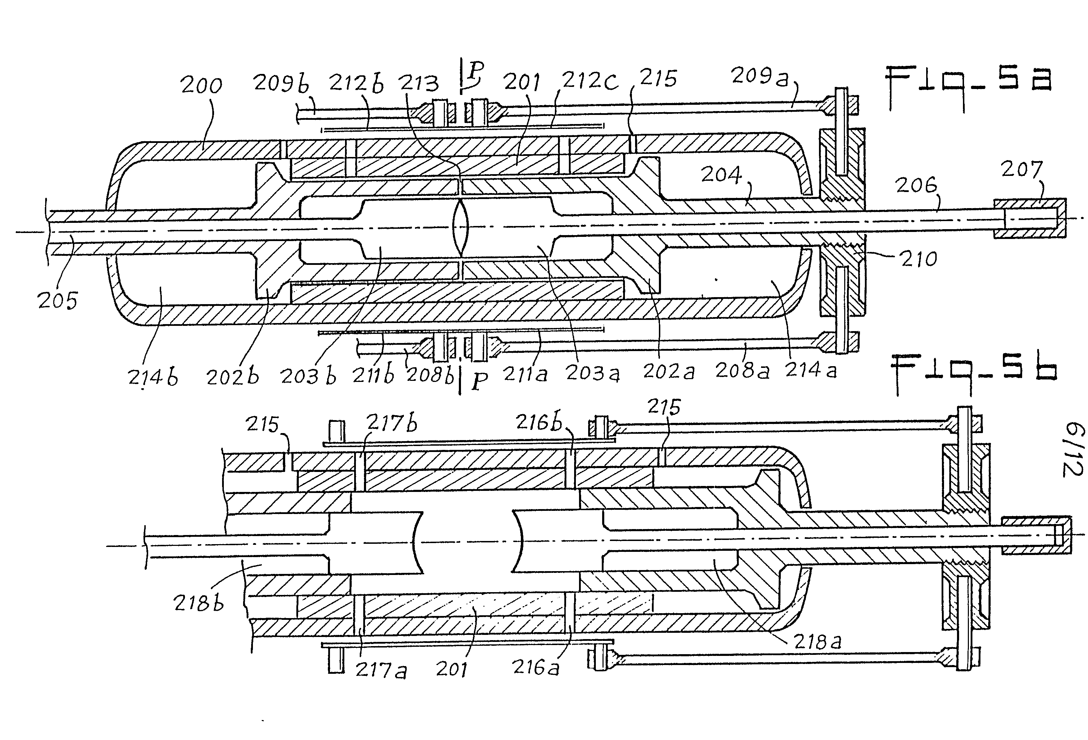

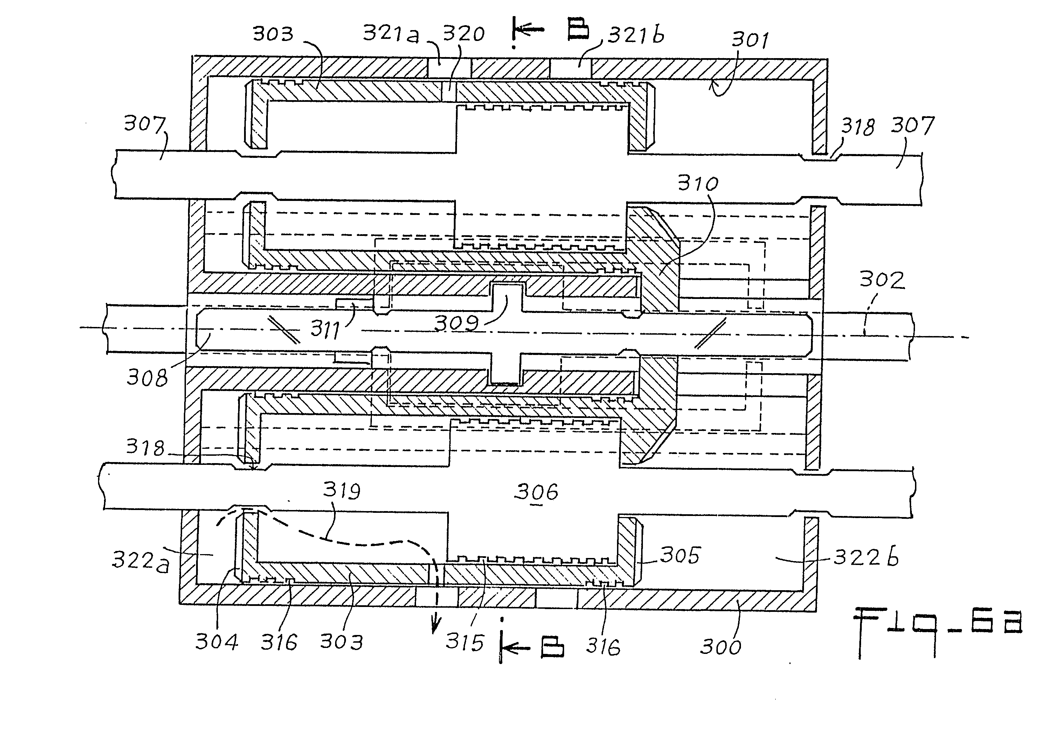

Dans un premier mode de réalisation du générateur hydraulique à pistons libres conforme à l'invention, montré sur les figures 4a et 4b, un moteur Diesel à quatre cylindres en ligne du type conventionnel en dessous du plan 105 du joint de culasse, est adapté aux buts de l'invention par le fait que des tiges axiales 106 sont ancrées sur la face supérieure des pistons 101, 102, 103, 104, c'est-à-dire sur la face opposée à l'embiellage, (non représenté).

Chaque tige axiale 106 comporte un épaulement 107 servant de piston hydraulique à l'intérieur d'un cylindre 108. Le piston 107 permet de faire travailler le volume $V_1$ de la chambre inférieure 110 du cylindre 108 en pompe hydraulique simple effet, la chambre 110 étant reliée au circuit hydraulique par une boîte à clapets non représentée. L'étanchéité entre la tige axiale 106 et le corps de pompe 111 est assurée par un jeu minimal de fabrication de ces deux pièces.

A son extrémité supérieure 113, chaque tige axiale 106 reçoit, par exemple par vissage, un piston moteur 114, qui se déplace dans la chambre 115. Le piston moteur 114 est réalisé en matériau composite conducteur thermique, du type carbure de s i l i c i u m -

c a r b u r e  d e  s i l i c i u m ,  p a r

exemple, et comporte des gorges annulaires 125 de limitation de fuites.

La chambre 115 peut être réalisée en matériau composite conducteur si l'on dispose à l'extérieur un matériau isolant non représenté, ou en matériau composite isolant thermique, du type silice-silice par exemple.

L'ensemble des pistons 114 et du bloc de chambres 115 constitue la partie chaude du générateur hydraulique dont le bloc moteur 100 est isolé thermiquement par un élément plat isolant 116.

L'échappement et l'admission sont assurés, à la partie inférieure de la chambre de combustion, par des lumières 119 reliées (fig. 4b) à un collecteur chaud 117, réalisé en matériau composite conducteur ou

0044252

43

isolant, pour l'échappement, et à une pipe d'admission 118 réalisée en matériau composite isolant, afin d'éviter un préchauffage de l'air par conduction entre la pipe d'admission 118 et la chambre 115 dont elle est solidaire.

S'agissant d'un moteur à deux temps à quatre cylindres à embiellage, le vilebrequin a quatre manetons à 90°, répartit et équilibre dans les quatre cylindres les phases du cycle : balayage pour le piston moteur correspondant au piston 104, compression pour 103, fin de compression pour 101, et détente pour 102.

En début de cycle, les lumières d'admission et d'échappement sont dégagées par le piston moteur 114 et il y a évacuation des gaz brûlés du cycle précédent d'abord naturellement puis par l'air de balayage.

La pression de l'air de balayage peut être obtenue :

- par un turbo-compresseur entraîné par les gaz d'échappement non figuré sur les figures 4a et 4b, ou bien

- à partir de l'air qui peut être comprimé dans la chambre supérieure 120 et des pistons 101,104 si on ne réalise pas les orifices de mise à l'air libre 121 (il faudrait dans ce cas utiliser pour le balayage d'une chambre de combustion la chambre de compression d'un autre cylindre) ; ou encore

- à partir de l'air qui peut être comprimé entre le piston moteur 114 et l'embase isolante 116, le transfert se faisant alors, au sein même du cylindre, entre les deux faces du piston 114 par une canalisation dans la chambre 115 par exemple.

Le vilebrequin entraîne le piston moteur 114 vers le point mort haut jusqu'à la fin de compression. De façon classique, on a procédé au début de l'injection

0044252

44

de gas oil peu avant le point mort haut au moyen d'un injecteur 122 situé à la partie supérieure de la chambre de combustion et dont l'ouverture est commandée par l'arbre à cames.

Pendant la course de détente, le volume ($V_1$) renferme de l'huile haute pression, chassée vers l'accumulateur comme il a été vu plus haut ; pendant la course de compression, à l'inverse, le volume est rempli d'huile basse pression venant du réservoir de fluide hydraulique.

Pour éviter que l'air du volume 123 ne soit comprimé pendant la détente des gaz brûlés (la pression ainsi créée venant en déduction de l'effort moteur), on dispose des orifices 124 de mise à l'air libre qui, comme les orifices 121 sont calibrés et définissent le débit d'air de refroidissement nécessaire pour limiter l'échauffement des cylindres hydrauliques moteurs et surtout, par conduction, des tiges de pistons et des pistons 101-104.

Du fait de l'inertie en rotation de l'équipage mobile (bielles, vilebrequin, volant), la vitesse de rotation du vilebrequin est constante.

On distingue donc deux modes de fonctionnement :

- le fonctionnement à pleine charge où la puissance motrice est prélevée par les pompes hydrauliques et fournie par des injecteurs de puissance 122 délivrant dans chaque cylindre une quantité de carburant fixée par construction.

- le fonctionnement à charge nulle où la puissance motrice est nulle, les pompes hydrauliques (volumes ($V_1$) ) étant mises en court circuit, par exemple par des électro-robinets "by pass".

Des injecteurs de ralenti délivrent le carburant nécessaire pour vaincre les pertes (frottement de l'équipage mobile du "moteur standard", pertes thermodynamiques par défaut d'adiabaticité, pertes de charge des écoulements d'air de refroidissement,etc.)

Pendant toute la marche du véhicule, le générateur fonctionne à régime constant ce qui permet, malgré l'importante inertie en rotation, de passer instantanément de la charge nulle à la charge nominale. On réalise ainsi avec un générateur embiellé le principe de fonctionnement intermittent à la puissance donnant le rendement optimal.

Le démarrage du générateur est assuré de façon classique par le démarreur électrique du"moteur standard" engrené sur la couronne dentée du volant.

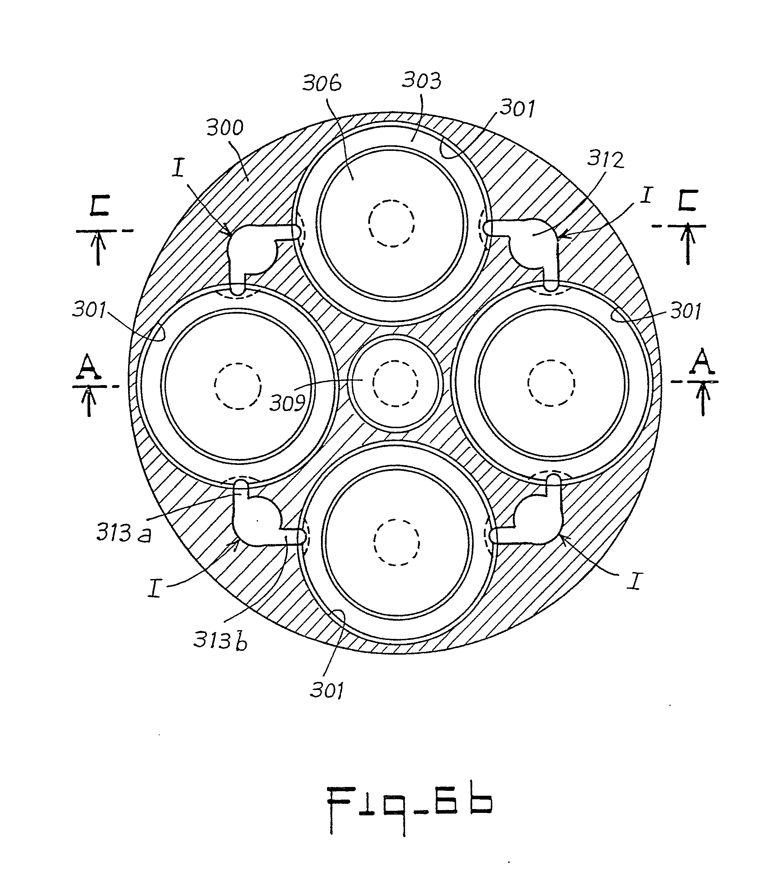

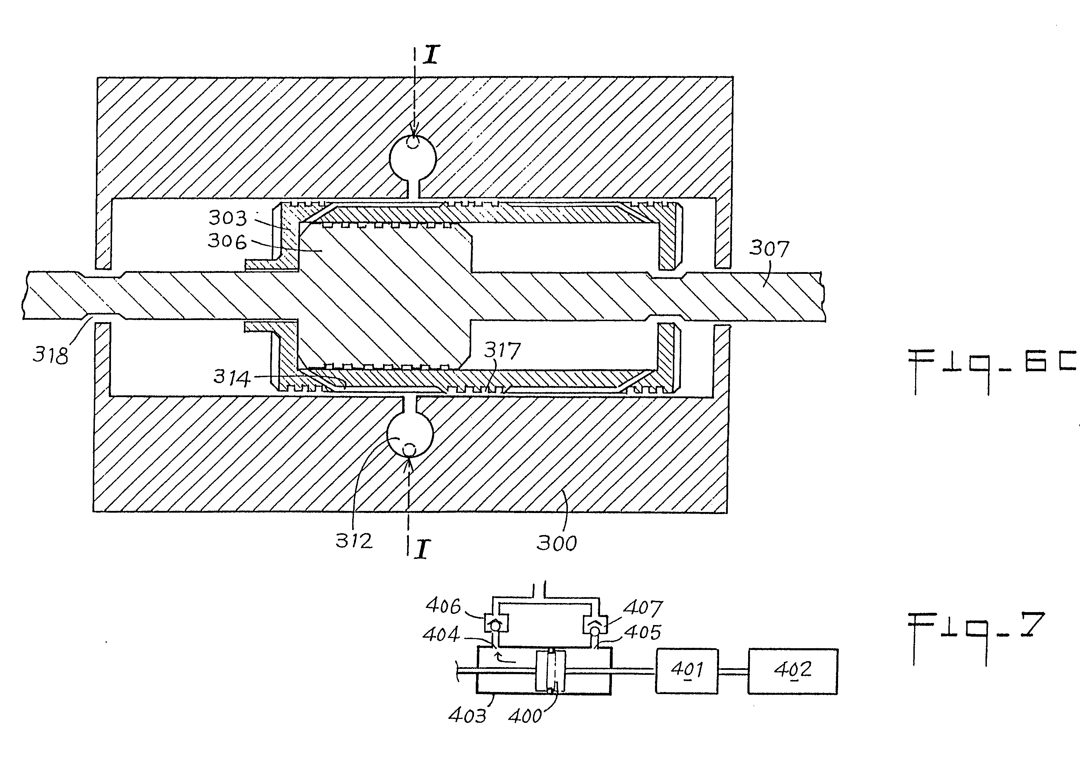

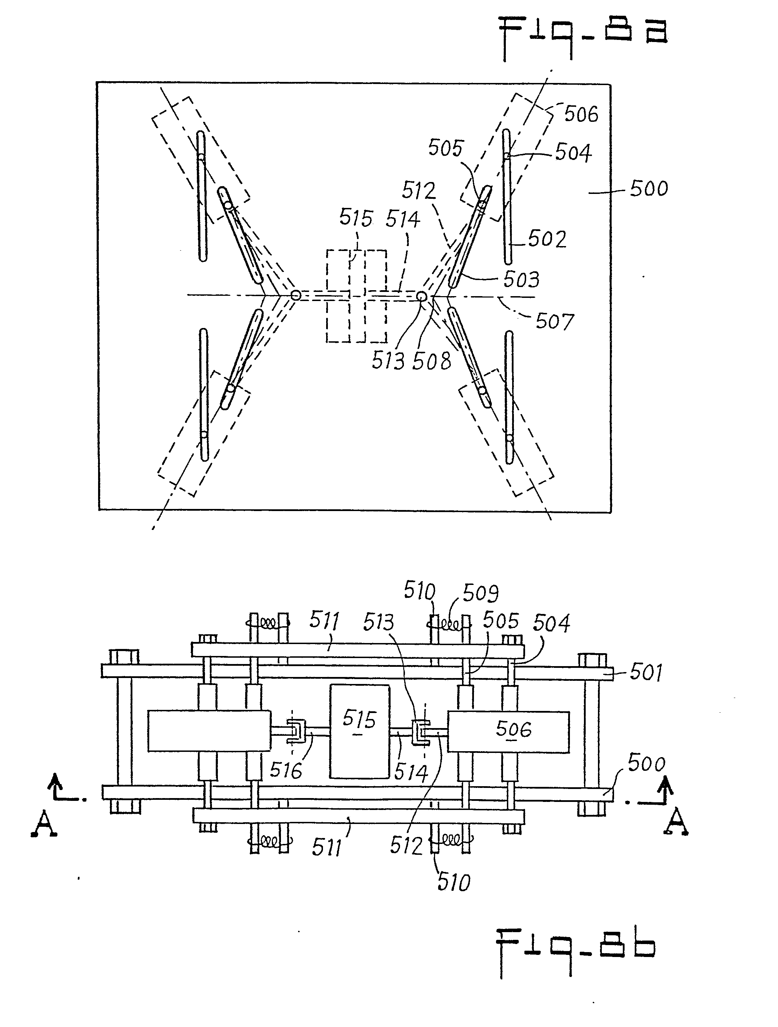

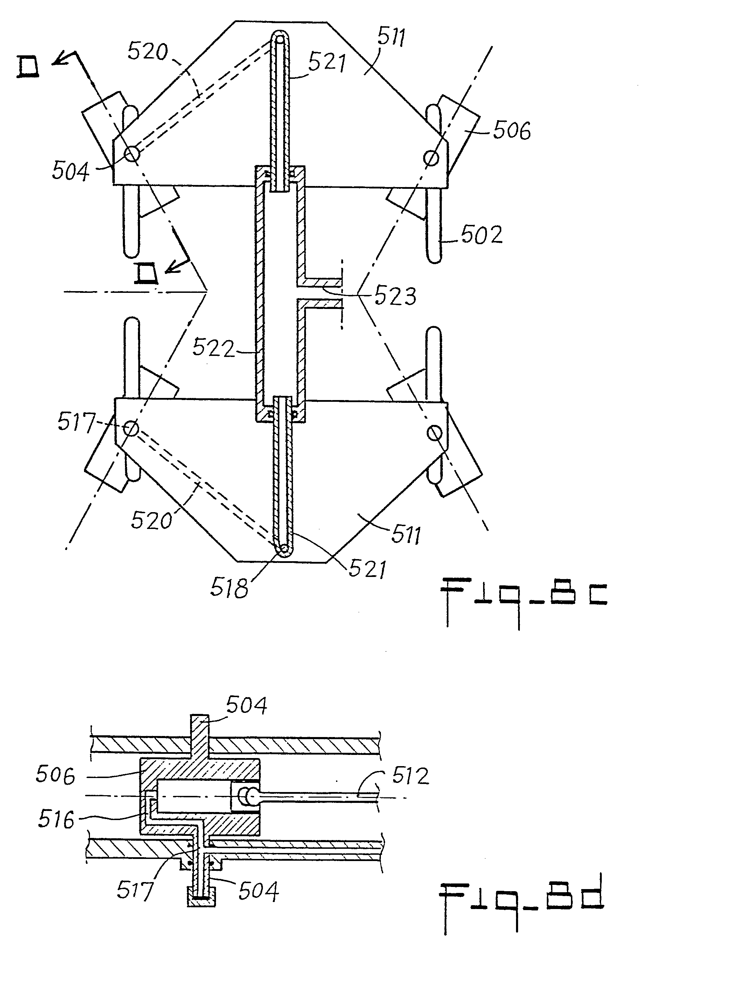

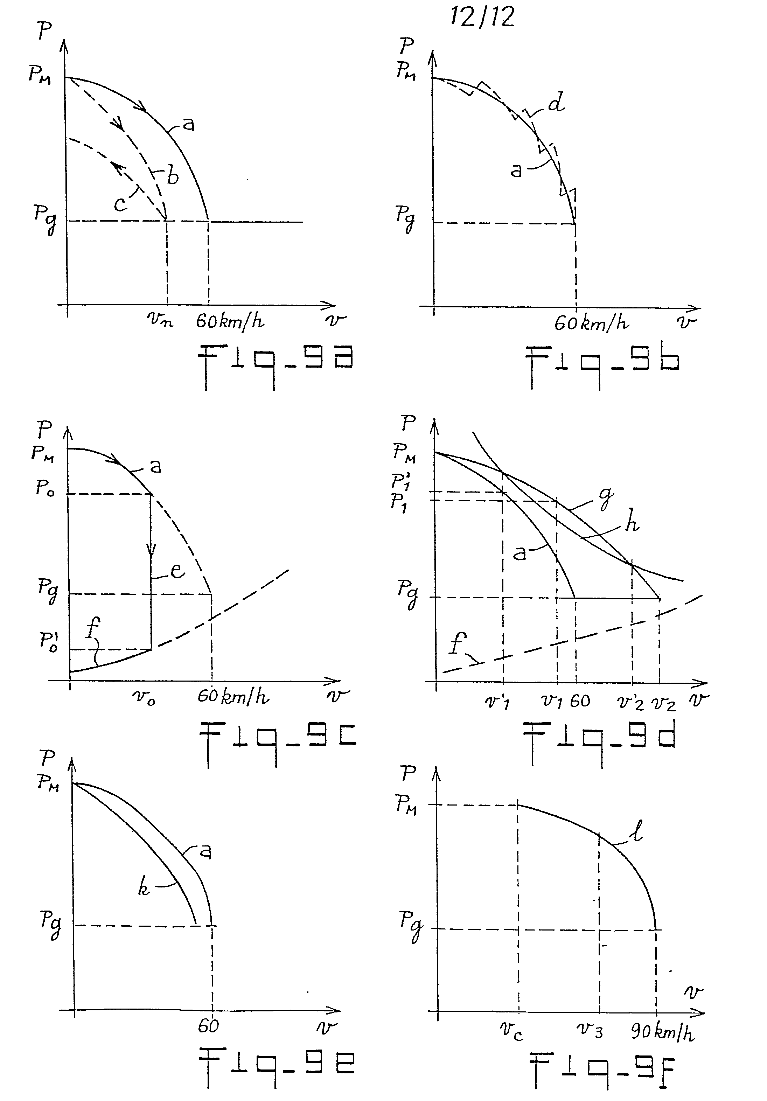

Dans un second mode de réalisation du générateur à pistons libres, montré sur les figures 5a et 5b, on utilise un moteur thermique Diesel deux temps à pistons libres simple effet à chemise embiellée.

Dans ce générateur de plan de symétrie P, un carter cylindrique fixe 200, réalisé en métal et peu sollicité tant sur le plan mécanique que thermique renferme une fourrure 201, deux chemises mobiles 202a et 202b et deux pistons 203a et 203b.

La fourrure 201 fixe,et réalisée en matériau composite isolant, s'étend sur une partie seulement de la longueur de l'alésage du carter 200 de part et d'autre du plan de symétrie P du générateur.

Les deux chemises 202a et 202b, à tout instant symétriques par rapport au plan P, grâce à un dispositif de synchronisation dont un exemple est décrit plus loin, sont réalisées en matériau composite éventuellement conducteur. Elles sont prolongées par une tige creuse 204 qui traverse le carter 200 sur l'axe de symétrie 205 du générateur.

Les deux pistons 203a et 203b, également symétriques à tout instant par rapport au plan P et réalisés en matériau composite éventuellement conducteur, sont prolongés par une tige 206 qui coulisse à l'intérieur de la tige 204 de chemise et entraîne le piston de la pompe hydraulique réceptrice (207).

Afin de synchroniser le mouvement des chemises,de part et d'autre du carter 200 se trouvent quatre bielles : 208a et 209a dont la tête est solidaire de la chemise 202a par une liaison 210 vissée sur la tige creuse 204 dépassant à l'extérieur du carter; et 208b et 209b solidaires de la chemise 202b par une liaison identique non représentée.

De part et d'autre du carter 200 il y a deux couples de pignons 211a, 211b d'un côté, 212a, 212b diamétralement opposés qui reçoivent excentrés les pieds des bielles 208a, 208b et 209a, 209b du côté diamétralement opposé.

Un injecteur 213 permet à chaque cycle d'introduire une quantité dosée de carburant dans la chambre de combustion située autour du point de symétrie du générateur ainsi décrit et délimitée par les faces opposées d'un ensemble chemise-piston et de l'autre.

Le carburant est injecté quelques instants avant que les chemises 202a et 202b ne viennent dans leur position la plus rapprochée (fig. 5a), par l'injecteur 213 déclenché à partir de l'un des pignons 211 ou 212.

Afin de faire décrire rapidement au moteur non refroidi les phases du cycle où les parois chaudes nuisent au rendement thermique et lentement les autres, les chemises 202a et 202b ont des masses identiques et très nettement plus fortes que celles des pistons 203a et 203b, de sorte que les pistons ont une accélération initiale plus forte que les chemises. Néanmoins, du fait de l'effort hydraulique antagoniste sur les pistons, l'accélération de ces derniers change de signe et ils viennent, sur leur énérgie cinétique, s'immobi-liser dans la position représentée par la figure 5b. Pendant ce temps, les chemises 202a et 202b continuent leur course au-delà du piston tout en comprimant de l'air dans les volumes 214a et 214b situés entre la face externe frontale des chemises et la face interne du carter. Ce matelas d'air est destiné à accumuler l'énergie nécessaire à la compression pour le cycle suivant.

Comme représenté, ce matelas d'air peut correspondre à un alésage plus fort que celui de la chemise côté chambre de combustion, ce qui permet de limiter la pression en fin de compression et corrélative-ment la température et le taux de travail du carter . Cet alésage dépend en partie du rapport de masses entre pistons et chemises que l'on cherche à réaliser. Des orifices 215 de mise à l'air libre du volume annulaire externe de la chemise sont prévus dans la paroi du carter 200 au bord de la fourrure 201 dans laquelle glissent les chemises 202. Ces orifices peuvent être utilisés pour remplir une capacité d'air destinée au balayage du moteur.

En fin de course de détente, chaque chemise dégage des orifices diamétralement opposés : 216a et 216b pour l'échappement des gaz brûlés, et 217a et 217b pour l'admission d'air frais. Du fait de la position asymétrique desdits orifices 216 et 217, un balayage très efficace se produit, ce qui est très important dans un moteur deux temps.

Durant la course retour des chemises, assurée par détente du matelas d'air des volumes 214a et 214b, il y a compression de l'air emprisonné dans les volumes 218a 218b entre l'épaulement de chaque piston et la chambre intérieure de chaque chemise, avec pour effet de ramener les pistons 203 sur une butée hydraulique solidaire de la pompe et non figurée en position butée de "point mort haut". Durant ce mouvement de retour des pistons moteurs, il y a aspiration d'huile basse pression dans les pompes hydrauliques 207. Le dimensionnement est fait de telle sorte que les pistons arrivent à leur course maximum avant les chemises.

Un entraînement mécanique des pignons 211 et 212 par un démarreur électrique, par exemple, ou un entraînement pneumatique par introduction d'air comprimé dans les chambres 214, permettent de démarrer le moteur.

Un troisième mode de réalisation du générateur à piston libre, conforme à l'invention, consiste en un générateur Diesel deux temps à pistons libres double effet, montré sur les figures 6a, 6b, 6c.

Un carter fixe 300, réalisé en matériau composite isolant, comporte quatre alésages 301 répartis symétriquement autour de son axe 302, dans lesquels coulissent quatre chemises 303 constituées de matériau composite conducteur, avantageusement revêtu de matériau composite isolant sur leurs faces externes avant et arrière, 304 et 305.

Quatre pistons 306 coulissent à l'intérieur des chemises 303 et comportent de part et d'autre des tiges axiales 307 les reliant aux pistons des pompes hydrauliques réceptrices de la puissance développée par le mouvement des pistons moteurs (non représentées).

Une vis 308, réalisée en matériau composite du type carbone-carbone autolubrifiant et disposée sur l'axe de symétrie 302 du moteur, assure, par des filetages opposés situés de part et d'autre d'un épaulement central 309 libre de tourner dans le carter fixe mais immobilisé en translation, un mouvement rigoureusement symétrique des deux groupes de deux chemises diamétralement opposées. A cet effet, lesdites chemises sont reliées deux à deux par des éléments de liaison 310 (respectivement 311) taraudés sur l'axe de symétrie du générateur pour recevoir la vis 308.

Quatre chambres de combustion 312, dans lesquelles débouchent quatre injecteurs I, sont reliées (fig. 6b) respectivement aux chambres de compression et de détente des deux cylindres adjacents par deux canalisations 313a et 313b réalisées dans le carter fixe 300 et débouchant entre un piston 306 et sa chemise 303 par l'intermédiaire de canalisations 314 (fig. 6c) usinées, suivant deux génératrices diamétralement opposées, à l'extérieur des chemises 303. Du fait de la symétrie de mouvement des chemises deux à deux, chaque chambre de combustion 312 est reliée à chaque instant, aux chambres opposées de détentes de deux cylindres adjacents.

Les pistons 306 et leurs chemises 303 sont munis de multiples gorges externes respectives 315 et 316 destinées à limiter les débits de fuite et en tout cas à s'opposer à ce que, dans le temps d'une course aller ou retour, la fuite ne puisse atteindre la face opposée du piston ou de la chemise.

50

Sur les génératrices des chemises 303 qui portent les canalisations 314 et dans la zone médiane de la chemise, entre les deux canalisations allant vers l'avant et l'arrière, de multiples gorges 317 (fig.6c) usinées à la fraise sur une faible fraction de la circonférence, permettent d'éviter un débit de gaz entre les chambres de combustion et alternativement l'une ou l'autre des faces des pistons 306 du fait de l'existence des canalisations 314.

Sur les tiges 307 de piston sont aménagées, de part et d'autre et symétriques par rapport au piston 306, deux gorges 318 destinées aux transferts d'air ayant lieu : d'une part, à l'admission, entre le carter 300 et l'extérieur des chemises 303 ; et, d'autre part, lors du balayage du cylindre (flèche en pointillé 319, fig. 6a) en fin de course de détente, par intercommunication entre extérieur et intérieur des chemises. Une seule gorge 318 peut être utilisée successivement pour les deux fonctions mentionnées ci-dessus. Les gorges 318 peuvent comporter trois nervures dans le sens axial, afin de maintenir l'effet de centrage dans l'alésage du carter ou de la chemise.

Dans le plan médian des chemises 303, sont disposés des orifices radiaux 320 qui sont alternativement en regard d'orifices radiaux 321a et 321b réalisés dans le carter fixe 300. Lorsqu'il y a concordance entre ces orifices (fin de détente), les gaz brûlés d'abord puis une fraction de l'air de balayage sont évacués par les orifices. Pour éviter toute dissymétrie des efforts radiaux sur les chemises, les orifices 320, 321a et 321b, non tous représentés, sont en nombre pair et diamétralement opposés deux à deux pour chacun des quatre ensembles mobiles.

Le générateur est démarré soit mécaniquement, par exemple au moyen d'un démarreur électrique
entraînant la vis 308 en rotation alternée, soit pneumatiquement, par une réserve d'air pressurisé alimentant alternativement les volumes avant 322a et arrière
322b des chemises 303, soit hydrauliquement, en faisant
fonctionner les pompes hydrauliques associées aux pistons 306 en moteur de démarrage.

Le fonctionnement d'un cylindre est le
suivant. Sur la figure 6a, le piston 306 est en position
d e butée vers la droite et la chemise 303 en fin de
course vers la gauche. L'air admis dans la chambre de
droite (entre piston et chemise) est comprimé et
une partie de l'air qui avait été admis a été transféré
dans les canalisations 314 et 313 et dans la chambre
de combustion 312. On notera qu'il s'est partagé entre
deux chambres adjacentes au cylindre considéré, permettant ainsi d'équilibrer les fonctionnements entre
cylindres adjacents soumis en fait à des mouvements
opposés.

En début de détente, le piston 306 est
soumis à une plus forte accélération que la chemise
(plus lourde que le piston) mais très vite cette accélération s'annule et s'inverse du fait de l'effort
hydraulique antagoniste à la détente des gaz sur le
piston. Le piston vient alors sur sa butée gauche.
Il s'agit d'une butée hydraulique très classique qu'il
est inutile de décrire.

La chemise 303 continue sa course vers la
droite sous l'effet de sa vitesse propre et de l'é-
nergie de fin de détente. Néanmoins, l'accélération
s'annule et s'inverse sous l'effet conjugué et de la compression sur la face gauche du piston 306, et de la
compression de l'air de balayage du volume 322b sur
la face droite externe de la chemise 303. Le volume
322b entre chemise et carter 300 a été en effet obturé
par le déplacement du piston 306 qui a décallé
vers la gauche la gorge 318, fermant ainsi le jeu annulaire entre l'axe de piston et l'alésage correspondant dans le carter 300.

La fin de course de la chemise 303 conjuguée
avec le déplacement du piston 306 vers la gauche en
début de détente, a pour effet de mettre l'orifice 320
en communication avec la chambre de droite qui est
arrivée en fin de détente et avec l'orifice d'échappement 321b.

Simultanément ou légèrement plus tard, l'alésage de la face droite de la chemise qui coulisse sur
la tige de piston 307 arrive en regard de la gorge 318
ménagée sur ladite tige 307 et permet l'admission de
l'air de balayage préalablement soumis à une légère compression dans le volume 322b compris entre la face
droite de la chemise 303 et le carter 300.

Dès lors le processus identique mais opposé
se produit sur la face gauche du piston (demi-période
suivante).

L'assemblage de quatre cylindres identiques
dans un même générateur assure la symétrie diamétrale,
nécessaire pour ne pas exercer de couple de flexion
sur la vis de synchronisation 308, et l'équilibrage
d'ensemble par un mouvement simultané mais opposé de
deux couples de chemises. Il doit être compris qu'au
lieu de quatre cylindres, on peut avoir un nombre quelconque $n$ de cylindres, $n$ étant toutefois pair et supérieur à quatre :
on aura dans ce cas $n$ chambres de combustion et $n$ injecteurs.

Dans chacun des modes de réalisation dé
crits, et plus particulièrement dans les générateurs à
pistons libres à double effet, des phénomènes d'instabilité statique dus à de multiples facteurs se traduisent par une tendance à avoir une course qui ne
reste pas constante.

Afin de compenser l'augmentation de course,
un système de butée hydraulique (figure 7) est adjoint
au générateur.  Il est constitué par un piston 400
solidaire mécaniquement de la pompe 401 associée au
générateur 402.  Le piston 400 se meut dans un cylindre
403 percé latéralement au voisinage de ses extrémités
de deux orifices 404 et 405 réunis au réservoir basse-
pression par l'intermédiaire de deux clapets antiretour à billes 406 et 407.  Lorsque le piston 400
arrive en fin de course, il masque un des deux orifices
et comprime le volume de fluide compris entre l'orifice
et la face du cylindre, ce qui réalise la butée élastique.

La diminution de course est combattue par
un dispositif comprenant deux capteurs potentiométriques
ou inductifs, placés à chaque bout des cylindres de
pompe, ou de générateurs, ou du cylindre de la butée
hydraulique, et délivrant des signaux qui, après traitement, sont transmis à une électrovanne d'injection
auxiliaire de carburant.

Quant à l'instabilité dynamique du générateur particulièrement dans le cas d'un générateur à
chambres libres, on y remédie en faisant fonctionner le
système à la fréquence la plus proche de la fréquence
propre d'un système linéaire équivalent (énergie minimale) ; en faisant en sorte que la force de pression
hydraulique agissant à l'encontre du piston moteur soit
constante quelle que soit la valeur de la pression

hydraulique de l'accumulateur dans lequel débite la pompe ; enfin, en ayant un débit d'injection constant.

De ce qui précède il résulte, en se référant à nouveau à la figure 1, que, dans le cas où les générateurs 1 sont à éléments mobiles embiellés, à la course bien définie, la pompe associée au générateur et débitant dans l'accumulateur haute pression qui se remplit à pression croissante, peut être une pompe linéaire (piston coulissant dans un cylindre) munie d'un"circuit de redressement" permettant de diriger le débit toujours dans le même sens. Ce dispositif de redressement peut être constitué,par exemple, par un ensemble de billes disposées entre la pompe et les circuits haute et basse pressions auxquels elle est reliée.

Ainsi qu'il a été dit, selon l'invention,il est fait en sorte que la course et l'effort sur le piston soient constants, quelle que soit la pression dans l'accumulateur. Pour que l'effort sur le piston soit constant, alors que la pression de l'accumulateur augmente, il est nécessaire que le débit (ou cylindrée) varie en raison inverse de la pression. Il convient donc que la pompe soit une pompe à puissance hydraulique constante, quel que soit le niveau de la pression de refoulement.

Les figures 8a, 8b, 8c, 8d, représentent un mode de réalisation d'une pompe à puissance constante double effet.Deux flasques parallèles 500 et 501 sont percés de quatre lumières verticales 502 et quatre lumières obliques 503 qui servent de glissières aux deux axes supports respectifs 504 et 505 de chacun de quatre corps de pompe à simple effet 506, placés entre les deux flasques. Les lumières obliques 503 sont inclinées d'un angle compris entre 20° et 64°, pour un fonctionnement de la pompe à une pression évoluant entre 140 et 300 bars.

Grâce à ces glissières, les corps de pompes de droite sont assujettis à se déplacer symétriquement par rapport à l'axe de mouvement 507 en restant orientés et rappelés vers un point fixe 508 (fig. 8a) par des ressorts 509 (fig. 8b) attachés d'un côté aux axes supports 505 glissant dans les glissières obliques 503, et de l'autre à un axe fixe 510 passant par le point fixe 508. Les tiges 512 des pistons des pompes 506 sont associées mécaniquement par une articulation 513 à une extrémité 514 de la tige de piston du récepteur hydraulique 515 du transmetteur de puissance. Une disposition analogue prévaut pour les corps de pompe de gauche, dont les tiges sont liées à l'autre extrémité 516 de la tige de piston du récepteur 515.

Ceux des axes supports de pompe 504, passant par le centre des corps de pompes 506 et glissant dans les glissières verticales 502, qui se trouvent du même côté de l'axe de mouvement 507 sont réunis par des plaques mobiles rigides 511 assujetties à se déplacer verticalement.

Les pistons du récepteur hydraulique 515 communiquent leurs mouvements à l'ensemble des quatre pompes 506, qui sont reliées au circuit hydraulique haute et basse pression de la façon montrée sur les figures 8c et 8d.

Chaque cylindre de pompe 506 est alimenté en fluide par un cheminement 516 dans l'épaisseur du cylindre, cheminement qui débouche par un perçage 517 dans l'axe 504 qui passe par la glissière verticale 502.

Le fluide continue son chemin par un passage 520 à l'intérieur des plaques mobiles 511, par l'intermédiaire de joints tournants 528 et 519.

Les deux plaques mobiles 511 représentées au premier plan de la figure 8c servent de cheminement au fluide concerné par les cylindres de gauche, tandis que les flasques mobiles de l'arrière plan servent de cheminement au fluide concerné par les cylindres de droite.

Les deux cheminement hydrauliques de gauche (sur les plaques inférieure et supérieure) débouchent dans deux tubes 521 portés par les deux plaques 511 du premier plan et qui coulissent axialement et de façon étanche dans un cylindre 522 fixé par ses deux extrémités. Un perçage 523 du cylindre 522 sert au raccordement avec la boîte à clapet et, de là, au circuit hydraulique haute et basse pression.

Une disposition semblable est prévue pour le raccordement des cylindres de droite.

Lorsque le mouvement du piston du récepteur hydraulique 515 a lieu alternativement vers la droite et vers la gauche, il est facile de vérifier que, compte tenu de la raideur des ressorts 509 et de l'inclinaison constante imposée au corps de pompes, l'ensemble fonctionne bien à puissance constante.

Les modes de réalisation précédemment décrits ont été donnés à titre d'exemple non limitatif, et l'homme de l'art pourra y apporter des modifications sans sortir du cadre de l'invention définie par les revendications annexées.

## REVENDICATIONS

1.          Procédé de propulsion pour véhicule à roues
susceptible de circuler en phase d'accélération ou de
croisière en réponse à un enfoncement de la pédale d'accélération et en phase de freinage, en réponse à un
enfoncement de la pédale de freinage, ce procédé étant
du type selon lequel on  transmet l'énergie hydraulique
haute-pression fournie par au moins un générateur hydraulique constitué d'un moteur thermique alternatif
dont les pistons entraînent cinématiquement, sans l'intermédiaire de vilebrequin, les pistons d'une pompe hydraulique, à des moteurs hydrauliques à cylindrée variable
au travers d'un accumulateur hydraulique haute pression
de stockage temporaire, c a r a c t é r i s é  en ce
qu'on fait fonctionner le générateur hydraulique (1,8)
exclusivement à deux points de fonctionnement à fréquence,
quantité de carburant par cycle et richesse constantes,
l'un de ces points correspondant à la puissance nominale
définie par le point de consommation minimale du moteur,
l'autre correspondant à un fonctionnement à puissance
réduite ou nulle, en faisant fournir à la pompe hydraulique (8) associée au moteur (1) une puissance hydraulique
constante ou nulle,de telle sorte que le mouvement du
piston thermique soit indépendant de la pression
de refoulement, et en ce qu'on assure la transformation
sans à coup du fonctionnement digital du générateur
en fonctionnement analogique de la transmission de
puissance aux roues en réponse à l'enfoncement de la
pédale d'accélération.

2.          Procédé selon la revendication 1, c a r a c-
térisé en ce qu'on règle pendant la phase de croisière
la pression hydraulique d'alimentation des moteurs
hydrauliques, qui sont à cylindrée variable, de façon
à obtenir la cylindrée maximale.

3. Procédé selon la revendication 2, c a r a c t é r i s é en ce qu'on utilise deux accumulateurs commutables (28,29) de capacités différentes, l'un de grande capacité (28) étant utilisé pendant la phase d'accélération, et l'autre pendant la phase de croisière.

4. Procédé selon la revendication 3, c a r a c - t é r i s é en ce que, à vitesse de croisière, il est possible d'utiliser t e m p o r a i r e m e n t l'a c - c u m u l a t e u r d'a c c é l é r a t i o n (28) p o u r disposer d'une surpuissance transitoire plus élevée que la puissance nominale du générateur hydraulique (1,8).

5. Procédé selon l'une quelconque des revendications 1 à 4, et selon lequel on récupère l'énergie de freinage dans l'accumulateur d'accélération (28) en faisant fonctionner les moteurs hydrauliques (3) en pompe, c a r a c t é r i s é en ce qu'on récupère le maximum de l'énergie de freinage, dans une plage de vitesses données, en assignant la loi de pression dans l'accumulateur d'accélération à être une fonction unique de la vitesse du véhicule.

6. Procédé selon l'une quelconque des revendications 1 à 5, c a r a c t é r i s é en ce qu'il est possible d'obtenir au cours de l'accélération une surpuissance transitoire plus élevée que la puissance nominale du générateur hydraulique en assignant la loi de pression dans l'accumulateur à être une fonction de la vitesse du véhicule et de l'enfoncement de la pédale d'accélération.

7. Procédé selon l'une quelconque des revendications 1 à 6, c a r a c t é r i s é en ce qu'on fait décrire au moteur thermique, lequel n'est pas refroidi, rapidement les phases du cycle où les parois chaudes nuisent au rendement et lentement les autres.

8.            Système de propulsion pour véhicule à roues susceptible de circuler en phase d'accélération, de croisière et de freinage, du type comportant :

- au moins un générateur hydraulique constitué d'un moteur thermique (1) alternatif dont les pistons entraînent cinématiquement, sans l'intermédiaire de vilebrequins, les pistons d'une pompe hydraulique (8), chaque cylindre moteur comportant une électrovanne d'injection (2) ;

- un ou plusieurs moteurs hydrauliques d'entraînement des roues dont la cylindrée est modifiable au moyen de servo-moteur (37), ce moteur (3) pouvant fonctionner en pompe pour une cylindrée négative et freinant le véhicule,

- un accumulateur haute-pression (28) intercalé entre le générateur (1,8) et le moteur hydraulique (3) ;

- un réservoir basse-pression (36) sur le circuit de retour du fluide hydraulique du moteur hydraulique (3) vers le générateur (1,8) ;

- une pédale d'accélération ;

- une pédale de freinage ;

c a r a c t é r i s é   en ce que le générateur hydraulique (1,8) a exclusivement deux points de fonctionnement à fréquence, quantité de carburant par cycle et richesse constantes, l'un correspondant à la puissance nominale définie par le point de consommation minimale du moteur, l'autre correspondant à un fonctionnement à puissance réduite ou nulle, la pompe (8) associée au moteur thermique fournissant une puissance hydraulique constante ou nulle, de telle sorte que le mouvement du piston thermique soit indépendant de la pression de refoulement, et en ce qu'il est prévu des moyens (50,51) pour réaliser la condition que le couple transmis est indépendant de la pression et uniquement sensible à l'enfoncement l'enfoncement (βa) de la pédale d'accélération, de manière à assurer la transformation sans à coups du fonctionnement digital du générateur hydraulique (1,8) en fonctionnement analogique de la transmission du couple aux roues.

9.　　　　Système selon la revendication 8, c a r a c t é r i s é　en ce que lesdits moyens comprennent un dispositif de réglage de la cylindrée des moteurs hydrauliques comportant un amplificateur asservi (50,51) dont le signal de sortie est inversement proportionnel à la pression (P) de l'accumulateur haute-pression (28) et proportionnel à un signal (βa) provenant de la pédale d'accélération.

10.　　　　Système selon l'une quelconque des revendications 8 ou 9, c a r a c t é r i s é　en ce qu'il comporte des moyens de réglage (55,53,29) de la pression hydraulique des moteurs hydrauliques, pendant la phase de croisière, de manière à obtenir la cylindrée maximale.

11.　　　　Système selon la revendication 10, c a r a c t é r i s é　en ce que lesdits moyens de réglage comprennent un deuxième accumulateur haute-pression (29), dit accumulateur de croisière, de capacité moins grande que le premier, et commutable avec le premier accumulateur (28) pour être utilisé pendant la phase de croisière.

12.　　　　Système selon la revendication 11, c a r a c t é r i s é en ce qu'il comporte, pour la commutation des deux accumulateurs (28,29), une électrovanne trois voies (71) sensible à un signal d'écart (βa-kv) fourni par des capteurs d'enfoncement de la pédale d'accélération et de vitesse du véhicule.

13.　　　　Système selon l'une quelconque des revendications 11 ou 12, c a r a c t é r i s é　en ce qu'il comporte quatre moteurs hydrauliques (3) dont deux identiques à l'arrière, dimensionnés pour produire une puissance mécanique totale sur les roues arrière égale à la puissance mécanique du moteur thermique et qui correspond à la vitesse de croisière maximale du véhicule, reliés au travers d'une commutation aux deux accumulateurs haute-pression, et deux moteurs hydrauliques à l'avant, plus puissant que les moteurs arrière.

14.      Système selon l'une quelconque des revendications 8 à 10, c a r a c t é r i s é  en ce que plusieurs moteurs de puissance distincte ou identique sont montés de façon à pouvoir fonctionner ensemble ou séparément, sur un différentiel actionnant les roues du véhicule, la commutation des moteurs se faisant de façon que la cylindrée moyenne des moteurs en service soit la plus élevée possible.

15.      Système selon l'une quelconque des revendications 8 à 14, du type comprenant des moyens pour récupérer dans l'accumulateur d'accélération l'énergie de freinage, c a r a c t é r i s é en ce qu'il comporte des moyens (54) pour assujettir la puissance moyenne de sortie de la pompe (8) à être proportionnelle au signal d'écart  entre un signal de pression de consigne (Pc), fonction prédéterminée optimale de la vitesse (ʊ) et un signal d'un transmetteur de pression (45) de l'accumulateur d'accélération (28).

16.      Système selon l'une quelconque des revendications 8 à 15, c a r a c t é r i s é  en ce qu'il comporte des moyens (54) pour assujettir la puissance moyenne de sortie de la pompe à être proportionnelle au signal d'écart entre un signal de pression de consigne (Pa), fonction de la vitesse (ʊ) et de la position de la pédale d'accélération (ßa), et un signal d'un transmetteur de pression (45) de l'accumulateur (28).

17.        Système selon l'une quelconque des revendications 8 à 16, c a r a c t é r i s é  en ce qu'il comporte un dissipateur d'énergie (4) placé sur le circuit hydraulique en amont des moteurs hydrauliques (3) et comportant un pointeau mobile (6) susceptible de créer une perte de   charge et placé en amont des moteurs hydrauliques (3) et un clapet de surpression (3) reliant un point du circuit haute pression (9) en amont du pointeau mobile (6) et un point du circuit basse pression (18).

18.        Système selon l'une des revendications 8 à 16, c a r a c t é r i s é  en ce qu'il comporte une pompe hydraulique à puissance constante, qui comporte quatre corps de pompe simple effet (506) dont les axes passent deux à deux par deux points fixes (508) situés sur l'axe de mouvement (507) et de part et d'autre du transmetteur hydraulique (515), ces corps de pompes étant susceptibles de se déplacer verticalement et en rotation grâce à deux lumières appropriées (502, 503) qui servent de glissières à chaque corps de pompe, en ce que les deux prises de mouvement du piston transmetteur 515) sont reliées chacune par des articulations (513) avec deux pistons de pompe, situées du même côté de l'axe de mouvement, l'angle entre chaque corps de pompe et l'axe de mouvement du transmetteur (515) résultant d'un équilibre entre la force de pression de refoulement et celle d'un ressort antagoniste (509) attaché entre le point fixe (508) et le corps de pompe (506), de sorte que l'ensemble fonctionne en pompe double effet à puissance constante.

19.        Système selon l'une quelconque des revendications 8 à 18, dont le moteur thermique est un moteur Diesel à deux temps à embiellage et dont les pistons sont synchronisés à leur partie inférieure par un ensemble de bielles et vilebrequin, c a r a c t é r i s é  en ce que chaque piston (101,102,103,104) porte à sa partie supérieure une tige axiale (106) comportant, d'une part un épaulement (107) servant de piston hydraulique et susceptible de glisser dans un cylindre (108) de pompe hydraulique reliée par une boîte à clapets au circuit hydraulique et, d'autre part, un piston thermique (114) susceptible de glisser à l'intérieur d'une chambre de combustion (115) ayant à sa partie supérieure un injecteur (122) de carburant et à sa partie inférieure des lumières pour l'échappement des gaz brûlés et l'admission de l'air.

20. Système selon l'une quelconque des revendications 8 à 18, dont le moteur thermique est un moteur Diesel et à deux temps et à pistons thermiques simple effet, c a r a c t é r i s é en ce qu'il comprend dans un carter fixe deux chemises mobiles (202) opposées maintenues symétriques par rapport à un plan transversal médian du carter par un dispositif de synchronisation (210,208,211), qu'à l'intérieur des chemises mobiles, est susceptible de glisser un piston thermique (203) plus léger qu'une chemise (202) et relié axialement à un piston de pompe hydraulique (207), que les faces opposées d'un ensemble chemise-piston et de l'autre délimitent une chambre de combustion à l'intérieur de laquelle est situé un injecteur (213), dans le plan transversal médian.

21. Système selon la revendication 20, c a r a c t é r i s é en ce que le dispositif de synchronisation des chemises comprend pour chaque chemise au moins une bielle (208,209) dont la tête est solidaire de la chemise (202) et le pied est monté excentré sur un pignon (211a, 212a) engrenant le pignon (211b, 212b) correspondant à l'autre chemise.

22. Système selon l'une quelconque des revendications 8 à 18, dont le moteur thermique est un moteur Diesel à deux temps et à pistons thermiques double effet, c a r a c t é r i s é par un carter fixe (300) comprenant $n$ alésages répartis symétriquement autour de son axe, $n$ étant pair supérieur ou égal à 4, $n$ chemises (303) coulissant dans les alésages (301), $n$ pistons thermiques (306) plus légers que les chemises (303) coulissant dans les chemises et axialement reliés (307) aux pistons hydrauliques, un dispositif de synchronisation des mouvements des chemises, $n$ chambres de combustion (312) munies de $n$ injecteurs, reliées à l'une ou l'autre des deux chambres de compression/détente formée par un piston thermique dans sa chemise.

23. Système selon la revendication 22, c a r a c t é r i s é en ce que chaque chambre de combustion (312) est reliée, à chaque instant, aux chambres opposées de détente de deux cylindres adjacents.

24. Système selon la revendication 23, c a r a c t é r i s é en ce que le nombre d'alésages est de quatre et en ce que le dispositif de synchronisation des chemises comprend une vis (308) placée dans l'axe (302) du carter, filetée à ses deux extrémités, bloquée en translation et libre en rotation, dans les filetages de laquelle sont vissés d'un côté un élément de liaison (310) de deux chemises opposées et de l'autre côté un élément de liaison (311) des deux autres chemises.

25. Système selon l'une des revendications 19 à 24, caractérisé en ce que les pistons thermiques, le carter et les chemises sont réalisés en matériaux composites conducteurs ou isolants.

Fig. 1

Fig-2A

Fig-2B

Fig-2C

0044252

Fig_3B

Fig_3A

**4/12**

**Fig-3C**

**Fig-3D**

Fig-4a

Fig-4b

5/12

0044252

Fig-5a

Fig-5b

0044252

Fig. 6a

Fig_6b

0044252

Fig-6C

Fig-7

307

300

317

303
306

314

318

312

I

I

407
405

406
404

403
400

402

401

Fig. 8a

Fig. 8b

Fig-8c

Fig-8d

0044252

12/12

Fig. 9a

Fig. 9b

Fig. 9c

Fig. 9d

Fig. 9e

Fig. 9f

**0044252**

Numero de la demande

# RAPPORT DE RECHERCHE EUROPEENNE

Office européen
des brevets

EP 81 40 1109

| | DOCUMENTS CONSIDERES COMME PERTINENTS | | | CLASSEMENT DE LA DEMANDE (Int Cl.) |
|---|---|---|---|---|
| Categorie | Citation du document avec indication, en cas de besoin, des parties pertinentes | | Revendication concernee | |
| A | <u>GB - A - 2 019 537</u> (FIAT) | | 1 | B 60 K 9/00 |
| A | <u>FR - A - 2 306 384</u> (T.R.D.F.) | | 1 | B 60 T 1/10 |
| A | <u>FR - A - 2 257 014</u> (SIGAUD) | | 1 | F 02 B 71/04 |
| | ---- | | | |

**DOMAINES TECHNIQUES RECHERCHES (Int Cl.)**

B 60 K
B 60 T
F 02 B

**CATEGORIE DES DOCUMENTS CITES**

X: particulierement pertinent

A: arriere-plan technologique

O: divulgation non-ecrite

P: document intercalaire

T: théorie ou principe à la base de l'invention

E: demande faisant interference

D: document cite dans la demande

L: document cite pour d'autres raisons

&. membre de la même famille, document correspondant

Le present rapport de recherche a été etabli pour toutes les revendications

| Lieu de la recherche | Date d achevement de la recherche | Examinateur |
|---|---|---|
| La Haye | 01-10-1981 | FLORES |

OEB Form 1503.1 06.78